# EUROPEAN PATENT APPLICATION

(11) **EP 4 818 923 A1**
(43) Date of publication of application: **07.10.2026**
(21) Application number: 26168054.0
(22) Date of filing: 26.03.2026
(51) Int. Cl.: G06F 16/2453, G06F 16/21, G06F 16/2455

(54) **DATA MANAGEMENT SYSTEM AND METHOD**

(30) Priority: 03.04.2025 GB 202505057
(71) Applicant: Capricorn Ventis Limited, Dublin D18 K7W4 (IE)
(72) Inventor: HAWKES, Mike, Amlwch, LL68 9RA (GB); GLENNANE, John Ronan, Wicklow, A67 N265 (IE)
(74) Representative: FRKelly

(57) **Abstract**

A data management system comprising one or more processors and memory storing instructions that when executed by the or each processor cause the data management system to maintain a data model; and a plurality of data structures representing the data model, comprising a plurality of entity types, a plurality of relationship types and a plurality of attribute types
characterised in that
(a) the data structures further comprises a link field matrix comprising structures that define permitted associations between the entity types, attribute types, and relationship types, wherein the link field matrix eliminates storage provision for an attribute type that is not associated with an entity instance; and
(b) the data management system further comprises:
a first table comprising one or more of forward and reverse pointers identifying related entity instances in accordance with the link field matrix, to support traversal execution using one or more of the link field matrix structures separate from the entity instances;
a traversal plan unit configured to receive a declarative entity traversal query and compile it into an executable traversal plan comprising a plurality of attribute-specific resolver tasks and traversal steps established using the link field matrix and the or each pointer of the first table; and
a traversal unit configured to execute the traversal plan by traversing between entity instances using the or each pointers of the first table and invoking resolver tasks to retrieve or compute one or more values of the or each attribute instances associated with the traversed entity instances, the or each values being either or both of stored in memory and retrieved from one or more local or remote data sources.

## Description

### Field of the Invention

The present invention relates to a system and method of managing a plurality of data and more particularly, a system and method of organising data for storage and subsequent retrieval of one or more components thereof.

### Background of the Invention

Current database technologies can be broadly divided into SQL databases, NoSQL databases and graph databases.

SQL has been widely used in relational database management systems (RDBMS) since the 1970s. A relational database is a collection of data items of well-structured format, stored within tables comprising columns and rows, referred to as records and attributes respectively. Typically, each row in a table is marked with a unique identifier called a primary key; and relationships can be made between rows among multiple tables using foreign keys stored in intermediate tables. A JOIN operation is used to retrieve data from several linked tables, by matching primary and foreign keys of all rows in the tables. But JOIN operations consume significant processing and memory resources. The fixed schema of relational databases requires developers to strictly structure and organise the data used in applications before creating a SQL database. But this makes it harder to evolve the schema over time as new needs emerge. Changes to the underlying schema often require database downtime, and in complex cases, might require significant redevelopment work. Indeed, because of their complexity, SQL databases require a high level of expertise to create and maintain.

The modelling, in a relational database, of relationships as data within schema conflicts with object-oriented modelling used in most programming languages, where pointers allow an object to maintain a collection of other objects to which it is related, so that relationships do not have to be stored explicitly. Object-relational impedance mismatch is an overhead that occurs when the object-oriented model in an application's code is misaligned with the relational model in a database. It can cause problems with complexity, performance, and data integrity. Similarly, on executing multiple transactions simultaneously, SQL databases can encounter deadlocks or race conditions, wherein the sequence of operations impact the final result. To prevent this, developers introduce concurrency control mechanisms into relational databases, thereby increasing their complexity. Similarly, because SQL does not naturally align itself to recursive queries, certain applications are more difficult to implement.

Database normalisation entails organising the columns and tables of a database to ensure proper enforcement of dependencies through database integrity constraints. By applying formal rules designed to eliminate non-atomic values and duplication of data, it prevents data manipulation anomalies and loss of data integrity. However, in highly normalised database structures, further code is required to distribute data across multiple tables. Executing inefficiently, it causes significant performance degradation. Because of its table structure, SQL databases can struggle to represent hierarchical or graph-like data; and do not handle unstructured data (videos, images etc.) effectively. This data must be processed into a structured form, adding further complexity. Furthermore, as traffic increases, SQL databases rarely scale horizontally (across multiple servers or nodes). Instead, they typically scale vertically (by adding more hardware to a machine or migrating to a server with more CPU, RAM or SSD capability).

NoSQL uses non-relational data structures in which data is not solely stored in rows and tables. Instead, data is stored in one of four types of structures, namely column-oriented, key-value stores, document stores and graph databases. In contrast with the predefined schema and structured data types of SQL databases, NoSQL databases have dynamic schemas for unstructured data. Thus, there is less need to pre-plan and pre-organise data. Indeed, NoSQL databases are highly flexible and can adapt to changes in data schemas, as they do not enforce the consistency rules of SQL databases. Thus, updating or adding new fields to a data model is much easier in NoSQL databases. Furthermore, NoSQL databases can store and retrieve huge amounts of data rapidly and efficiently, with faster read and write speeds than SQL databases. NoSQL systems are particularly useful in databases with thousands of concurrent connections. Similarly, NoSQL databases provide automatic sharding, replication and other functionalities that help with scaling horizontally, so that commodity servers can be added as needed, thereby providing a more cost-effective solution than SQL databases.

Operable without declaration of a formal structure, NoSQL Databases lack a single universally accepted data model or query mechanism. While offering advantages of scalability and performance, it also leads to lack of consistency. Furthermore, the lack of standardisation in NoSQL databases makes transitions between different systems challenging. In addition, NoSQL Databases lack ways of supporting grouping and aggregation. As a result, they have difficulties with complex data aggregation tasks.

A graph database is a NoSQL database that stores data as a network graph comprising nodes and edges. Nodes are used to store the data; and can be assigned labels used to classify the nodes. Nodes can also be assigned attributes in the form of key-value pairs. An edge stores the relationship between two nodes. In addition to labels and attributes, edges may also have direction, for example, no direction, one-way, or two-way. Thus, data can be stored in a flexible, scalable and efficient manner which enables new nodes and relationships to be added without following a pre-defined model. Accordingly, graph databases are ideal for applications such as social networks and recommendation engines that require complex and highly connected data structures.

In a graph database model, each node has a list of link records that model the links to other nodes. These links are used for navigation about a graph database to access connected nodes. Links can be implemented as pointers, whose following is a constant time operation, independent of the amount of stored data. Furthermore, through its use of pointers, graph databases store data in a similar manner to object-oriented languages. Notwithstanding their advantages, Graph Databases can be complex to design, and have significant storage overhead due to the extensive storage of relationship data. Similarly, their performance can suffer with non-relationship-centric operations.

More generally, SQL, NoSQL, and Graph databases share problems with scalability, suitability, transparency and complexity. For example, while NoSQL and Graph databases address the problem of horizontal scalability, they have their own challenges with increasing volume and complexity of data. Indeed, each type of database has its own complexities, the learning of which and how to address them entails a steep learning curve, which can slow development and increase costs.

In addition to limitations in data modelling flexibility, existing database and query systems exhibit technical inefficiencies when executing complex, multi-entity traversal queries over distributed or heterogeneous data sources. Such inefficiencies include repeated re-computation of traversal paths, excessive network communication, global cache invalidation, and increased query latency. These issues arise from a lack of execution-level mechanisms for selectively materialising traversal results and maintaining cache coherence in response to incremental data changes.

Similarly, the adoption over time, of a range of databases by an organization, to manage increasing diversity of data types, can lead to suboptimal data design and usage, with multiple (often incomplete or outdated) copies of data, thereby compromising data suitability, integrity and efficiency. In addition, with complex queries embedded in the database tier, developers frequently bury business logic in a database, thereby reducing data portability and limiting future code maintainability.

Thus, there is a need for a robust and scalable mechanism of storing diverse data types and transparently representing the complexities of the relationships therebetween that overcomes the challenges of the prior art.

### Statements of the Invention

According to a first aspect of the invention there is provided
A data management system comprising one or more processors and memory storing instructions that when executed by the or each processor cause the data management system to maintain a data model; and a plurality of data structures representing the data model, comprising a plurality of entity types, a plurality of relationship types and a plurality of attribute types
characterised in that
   (a) the data structures further comprises a link field matrix comprising structures that define permitted associations between the entity types, attribute types, and relationship types, wherein the link field matrix eliminates storage provision for an attribute type that is not associated with an entity instance; and
   (b) the data management system further comprises:
      a first table comprising one or more of forward and reverse pointers identifying related entity instances in accordance with the link field matrix, to support traversal execution using one or more of the link field matrix structures separate from the entity instances;
      a traversal plan unit configured to receive a declarative entity traversal query and compile it into an executable traversal plan comprising a plurality of attribute-specific resolver tasks and traversal steps established using the link field matrix and the or each pointer of the first table; and
      a traversal unit configured to execute the traversal plan by traversing between entity instances using the or each pointers of the first table and invoking resolver tasks to retrieve or compute one or more values of the or each attribute instances associated with the traversed entity instances, the or each values being either or both of stored in memory and retrieved from one or more local or remote data sources.

Preferably, the data management system further comprises a traversal cache review unit configured to determine whether a result of a portion of the traversal plan has been previously materialised and stored in a local cache; and in the event a valid cached traversal result is available, to return it without re-executing the corresponding traversal steps of the traversal plan.

Preferably, the data management system is configured to:
subscribe to update notifications generated in response to changes in underlying entity, attribute, or relationship data, as governed by the link field matrix;
identify, in response to a received update notification, cached traversal results affected by a change, by referring to traversal dependencies recorded during compilation or execution of the traversal plan; and
selectively invalidate or refresh only the affected cached traversal results, by re-executing the corresponding resolver tasks.

Preferably, the link field matrix is configured to govern relationships between entity types by enforcing one or more of constraints, executable logic, and dynamic actions triggered during traversal execution.

Desirably, the resolver tasks retrieve or compute values of the attribute instances associated with relationship instances.

Desirably, a relationship type is represented as an attribute type denoting an enhanced relationship between entity instances.

Desirably, each attribute type is associated with a resolver task executable as part of the traversal plan to retrieve or compute values of attribute instances .

Preferably, resolver tasks execute concurrently.

Preferably, the link field matrix supports multiple concurrent representational models without duplicating underlying data.

Preferably, the link field matrix enforces non-destructive linking of entity instances.

Desirably, the link field matrix enables assembly of unrelated entity types into a traversal-addressable collection.

Desirably, resolver tasks integrate data from heterogeneous storage technologies.

Desirably, execution of resolver tasks includes pre-execution or post-execution hooks.

Preferably, resolver tasks execute within a microservices architecture, or within the data management system directly, wherein query planning and predictive cache management enable immediate in-system or distributed resolver task execution.

Preferably, update notifications are propagated via a publish-subscribe messaging system.

According to a second aspect of the invention there is provided data management method comprising the steps of:
creating a plurality of data structures representing a data model, wherein the data structures comprise a plurality of entity types, a plurality of relationship types and a plurality of attribute types;
creating a link field matrix comprising structures that define permitted associations between the entity types, attribute types, and relationship types, wherein the link field matrix eliminates storage provision for an attribute type that is not associated with an entity instance;
creating a first table comprising one or more of forward and reverse pointers identifying related entity instances in accordance with the link field matrix, to support traversal execution using one or more of the link field matrix structures separate from the entity instances;
receiving a declarative entity traversal query and compiling it into an executable traversal plan comprising a plurality of attribute-specific resolver tasks and traversal steps established using the link field matrix and the or each pointer of the first table; and
executing the traversal plan by traversing between entity instances using the or each pointers of the first table and invoking resolver tasks to retrieve or compute values of the or each attribute instance associated with the traversed entity instances Preferably, the method comprises the further steps of determining whether a result of a portion of the traversal plan has been previously materialised and stored in a local cache; and in the event a valid cached traversal result is available, returning it without re-executing the corresponding traversal steps of the traversal plan. Preferably, the method comprises the further steps of:
   subscribing to update notifications generated in response to changes in underlying entity, attribute, or relationship data, as governed by the link field matrix;
   receiving an issued update notification;
   identifying in response to a received update notification, cached traversal results affected by a change, by referring to traversal dependencies recorded during compilation or execution of the traversal plan; and
   selectively invalidating or refreshing only the affected cached traversal results, by re-executing the corresponding resolver tasks.

Preferably, the step of executing the traversal plan by traversing between entity instances using the or each pointers of the first table and invoking resolver tasks to retrieve or compute values of the or each attribute instance associated with the traversed entity instances, comprises the step of retrieving data from one or more of a local store of data and a remote source of data.

Desirably, the step of executing the traversal plan by traversing between entity instances using the or each pointers of the first table and invoking resolver tasks to retrieve or compute values of the or each attribute instance associated with the traversed entity instances comprises the step of executing resolver tasks concurrently.

Desirably, the step of executing the traversal plan by traversing between entity instances using the or each pointers of the first table and invoking resolver tasks to retrieve or compute values of the or each attribute instance associated with the traversed entity instances comprises the step of executing resolver tasks to integrate data from heterogeneous storage technologies.

Desirably, the step of executing the traversal plan by traversing between entity instances using the or each pointers of the first table and invoking resolver tasks to retrieve or compute values of the or each attribute instance associated with the traversed entity instances comprises the step of executing resolver tasks using pre-execution and post-execution hooks.

### Advantages of the Invention

The data management system of the preferred embodiment simplifies and optimises data representation by reducing complex data tables into a streamlined model of entities, their attributes, and the relationships therebetween. By leveraging a dynamic entity-attribute-relationship (EAR) framework, the preferred embodiment reduces the complexity of conventional siloed data models and breaks free of their constraints to support all current types of 'database back-end' storage mechanisms.

Thus, the preferred embodiment is equipped to handle complex data types, relationships, and structures far beyond that possible with traditional databases. Indeed, and in contrast with graph databases, the preferred embodiment allows both links and nodes to contain multiple data types (entity, attribute, relationship, and measurement observations), thereby enhancing its ability to model and handle intricate data relationships.

Specifically, the preferred embodiment:
- reduces data complexity so that any entity can be described using attributes and relationships to other entities;
- enables entities to possess nested attributes;
- stores any single value, or composite values in any attribute (including locations, temporal or other more complex data);
- permits an attribute to act as a direct relationship to another entity;
- supports attributes of relationships;
- supports graph-like queries for complex entity-relationship data models;
- emulates table-based databases by returning lists to received queries;
- uses overlay data models for performant operations on data structures like graphs and sequences, allowing the data structure to exist separately from the data, thereby abstracting the physical storage of data to ensure compatibility with existing technologies; and
- restricts relationships between entities, using a link field matrix.

Attributes in the present embodiment may contain values of any type (including functions), and nested data, either as an array of a single data type or as a set of key-value pairs. Attributes may also dynamically trigger predefined business rules or actions upon modification, ensuring responsive and real-time adaptability.

Relationships are explicitly defined data with source and destination attributes that link entities, without the entities being aware of the relationship. For example, a 'Person' entity may have attributes like title, forename, surname; and an 'Address' entity may have attributes like house number/name, street name and region. To link the Person entity to the Address entity, a relationship is created therebetween with a descriptor 'Home,' for example. On addition of a second Address entity, a relationship, with a descriptor 'Business', may be created between the second Address entity and the Person entity. Using, this approach, both a home address and business address are provided for a person, without the Person entity or any of the Address entities being aware of the existence of the relationships therebetween.

Entities may have multiple relationships to each other. For example, a Person entity might have "Director", "Employee", "Owner" relationships to an Organisation entity. A relationship implies directionality (source vs destination), and by adding two relationships, using opposing sources and destinations, bidirectional relationships are achieved. Each direction can be labelled and have their own attributes to help clarify the relationship context. For example, a bidirectional relationship may comprise a first relationship, labelled "employee", between an Organisation entity and a Person entity, and a second relationship, labelled "employer", between the Person entity and the Organisation entity.

Relationships may also be weighted, to capture the strength or importance of connections between entities. This feature may be especially useful for search result ordering, network analysis or social media analytics.

The preferred embodiment uses microservices to allow relationships to be dynamically formed, altered, or deleted based on conditions or triggers. For example, if a user highlights an item in a user interface and selects an action, a collection may be passively created to a single entity 'place-holder' (representing many records) for the back-end. Similarly, relationships may be configured so that changes therein trigger automated workflows and decision-making processes. Event triggers are fault-tolerant, ensuring continuity and accurate execution even in the event of partial system failure.

Any number of attributes may be assigned to relationships. These attributes could be of any type or complexity, adding depth to the relationships and providing richer insights. For example, attributes may allow relationships to have a temporal aspect, such as a start and end date, enabling the representation of changing relationships over time. This feature may be useful for historical data analysis, predictive modelling, and time-series analysis. Similarly, a relationship may be augmented by the inclusion of attributes to define the context of the relationship; or to classify or describe the nature of the relationship between two entities. Augmented relationships, also known as link fields, serve as both nodes and edges within a graph, thereby potentially supporting unique data structures, enhanced database functionality, and complex querying capabilities. Specifically, augmented relationships may also implement expressions, functions, or methods to support business requirements.

Using scripting, algorithms can be developed that analyse relationships based on their attributes, offering insights into patterns, anomalies, or trends in the data. More specifically, attributes and link fields support scripts that perform specific business functions when triggered by data retrieval or mutation. A resolver is a function that provides the logic for fetching or computing data for a specific attribute in a query. Each attribute is provided with a resolver which allows the attribute to refer to locally stored data, remote data, or calculate values on demand (such as conversions to or from a base unit of measure). The preferred embodiment employs pre- and post-transaction hooks to support tailored logic execution without altering the core system.

For example, a user might create a composite query about a person, delivery address, current orders, and outstanding invoice total. The outstanding invoice total is calculated using resolvers that query the local database for names, retrieve addresses with a specific relationship to a 'Delivery Address,' query an order processing system for open/current orders, and run a script to extract unpaid invoices from a remote accounting system and return the total outstanding.

This mechanism distributes queries or mutations to multiple concurrent resolver tasks, improving performance and scalability. It also allows integration with different technology stacks, enabling security of a wide variety of storage solutions and data federation (integrating data from multiple sources into a unified virtual view, without requiring physical consolidation of the data into a single repository, so that users and applications may query and interact with disparate datasets as though they exist in a single cohesive database or system). Specifically, any data attribute or entity may be present within the data model described or linked to its original source, but it should appear to a user as if the data is stored, queried, or modified in a single location.

A 'link field matrix' comprises one or more links between entities, attributes and relationships; one or more maps between entity types and attribute types; and one or more maps between relationship types and attribute types. The link field matrix provides order and coherence in an otherwise chaotic data model. The link field matrix defines how entities can relate to each other and may filter or restrict relationships between entities. For instance, the link field matrix might prevent the creation of a relationship between an invoice line item and a customer but allow a link between a line item and an order, and a link between an order and a customer. The link field matrix may also impose business-specific limitations on relationships between entity types. In a health-insurance system, for example, a general practitioner (GP) might have numerous patients, while a patient may only have one named GP. In another context, the link field matrix would permit a patient to consult any number of GPs, and a GP to see any number of patients.

The link field matrix governs relationships between entities by enforcing constraints, business logic, and dynamic custom actions including script execution triggered by user-defined operations. In its simplest form, the link field matrix drives business rules (e.g. requiring at least one delivery address, exactly one billing address, and zero or more marketing addresses). In more complex scenarios, the link field matrix specifies what functions should run whenever the system creates, updates, or deletes a link. By incorporating business logic or expressions within the link field matrix, the coherence of the data model may be enhanced (e.g. attaching attributes to a relationship at the time of its creation). The constraints may also be dynamically adaptable to entity attributes and relationship properties without requiring foundational system updates. A link field matrix may also include a query optimiser, providing efficient data retrieval and processing for multi-dimensional relationship and attribute data.

A Direct Relationship is an attribute of an entity that directly points to exactly one other entity (optionally, without the need for a link field matrix). Since the source entity has a dedicated attribute for a Direct Relationship, it cannot support additional attributes. As a result, the entity possesses 'knowledge of the connection' between the two entities.

The preferred embodiment permits the creation of any number of instances, or types, of entities, attributes and relationships without needing to change a data schema or table. This provides a direct correlation between design and implementation of data models. Furthermore, and in contrast to traditional databases, entities and relationships within the preferred embodiment can hold an unlimited number of attributes, thereby providing adaptable data models.

The preferred embodiment supports a variety of data structures (hierarchies, graphs, networks, etc.). This may be further enhanced by the support of transformations or conversions between different data structures or values, offering additional flexibility. The preferred embodiment also separates a data structure from its underlying data, enabling entities to simultaneously exist in multiple structures (such as hierarchies, unordered or ordered lists, collections, taxonomies etc.) and in multiple organisational contexts simultaneously without data duplication or loss of integrity. Thus, the preferred embodiment introduces views that are defined using the data model described, allowing for multiple concurrent yet distinct views of the underlying data. For instance, a task could simultaneously appear in a project hierarchy, a 'to do' list, a technical support case record and a list of actions required to resolve an issue.

The preferred embodiment introduces the concept of dynamic collections that can be used to provide real-time dynamic grouping of entities, attributes, or relationships based on arbitrary, user-defined criteria, enabling flexible and adaptive data organisation. Specifically, dynamic collections group any data entities, attributes, or relationships, without altering their inherent properties or behaviours; or their being influenced by these properties or behaviours. This provides a powerful and flexible approach to data grouping, data organisation and management, with correspondingly enhanced data management, query efficiency, and data analysis capabilities.

The preferred embodiment provides a unified API and security model for accessing data from various sources. Security is addressed with a robust protocol for end-to-end data encryption, role-based access control and an integrated audit mechanism which provides real-time generation of transaction logs and relationship history, to ensure transparency and traceability trails. This ensures consistency in data standards across all components.

By implementing security mechanisms based on users, groups, and roles, all defined within the same data model, the preferred embodiment enables specific permissions to be applied to specific entities, resolvers, attributes or associated types. The role-based access control is dynamically configurable based on entity attributes and relationship contexts, allowing for fine-grained access control. For example, by implementing access controls and permissions at the relationship level, the preferred embodiment ensures sensitive or private connections are only accessible to authorised users. Moreover, when integrated with resolvers, these permissions can extend to data access or updates on remote systems. For instance, a local user on a system can request payroll data, which may reside in the local data store or be accessible remotely through an external accounting system. In either scenario, the local user does not need to know the physical location of the data for their query to be resolved. This eliminates the need to create local copies of data, thereby reducing the associated costs and energy consumption associated with maintaining redundant copies of data.

The preferred embodiment reduces repeated traversal computation, network communication, and query latency by selectively re-executing only affected portions of cached traversal results in response to changes in underlying data.

Whereas conventional relational database systems traverse via JOINs computed at query time over foreign keys; and conventional graph databases traverse by means of adjacency lists stored within node records, the preferred embodiment performs traversal over typed external relationship structures.

Specifically, in the preferred embodiment, traversal proceeds via explicit relationship instances and link field structures that are separate from entity storage, wherein entities do not embed knowledge of their relationships. Thus, relationship traversal avoids the schema-dependent joins, and node-local adjacency expansion of conventional database systems.

Furthermore, whereas conventional relational databases and graph databases respectively perform traversal using a single join topology per schema and a single adjacency model per graph; the preferred embodiment performs traversal using pointers in an entity type link fields unit as a traversal substrate. The entity type link fields provides forward, reverse, parent and sequential pointers, which support multiple concurrent traversal topologies (graph, hierarchy, sequence, collection) over the same underlying entities.

Similarly, the preferred embodiment implements projection aware traversal. This is not a blind graph walk. Instead, the traversal is resolver-mediated, meaning that traversal steps are conditionally executed; attribute-level projection occurs during traversal; and traversal may terminate early based on resolver logic, cost, or cache state. By contrast, traditional database systems either traverse first and filter later, or materialise full joins before projection.

The preferred embodiment implements a microservices architecture supporting modular data manipulation, seamless backend migration, and conversion between diverse technologies without system disruption. The preferred embodiment may also implement a protocol for managing transactions across distributed systems, ensuring consistency and fault tolerance using a data bus architecture for coordination. The preferred embodiment also incorporates a data interoperability layer, enabling seamless interaction and data exchange between disparate systems and applications. Specifically, the preferred embodiment is operable across heterogeneous storage paradigms, including relational, NoSQL, and graph databases, supporting seamless data access without duplication or compromise. Overall, the preferred embodiment's decentralised design eliminates traditional bottlenecks, allowing scalable growth without compromising performance.

### Description and Drawings

One or more embodiments of the invention are herein described by way of example only with reference to the accompanying drawings in which:
Figure 1 is a block diagram of a data model of the data management system of a first aspect of the invention;
Figure 2a is a block diagram of entities without relationships therebetween in the data model of Figure 1;
Figure 2b is a block diagram of a list arrangement of the entities of Figure 2a;
Figure 2c is a block diagram of a group and hierarchy arrangement of the entities of Figure 2a;
Figure 2d is a block diagram of a sequential arrangement of the entities of Figure 2a;
Figure 2e is a block diagram of a mixed source set including Entity A and Entity B of the entities of Figure 2a;
Figure 3 is a flowchart of a data modelling component of a data management method of the second aspect of the invention;
Figure 4a shows an example of a first phase of the data modelling component of Figure 3;
Figure 4b shows an example of a second phase of the data modelling component of Figure 3;
Figure 5 is a block diagram of an exemplary software environment in which a resolver process of the query, search and retrieval component of the data management method operates;
Figure 6 is a flowchart of an implementation of a script or a call to an external data store executed by a resolver process of the query, search and retrieval component of the data management method;
Figure 7 is a block diagram of a system for implementing a traversal process of the query, search and retrieval component of the data management method;
Figure 8 is a flowchart of an overarching view of the data management method of the second aspect of the invention;
Figure 9 shows an example implementation of a link field matrix in the data management system of Figure 1;
Figure 9a shows a detail expanded from the example implementation of Figure 9; and

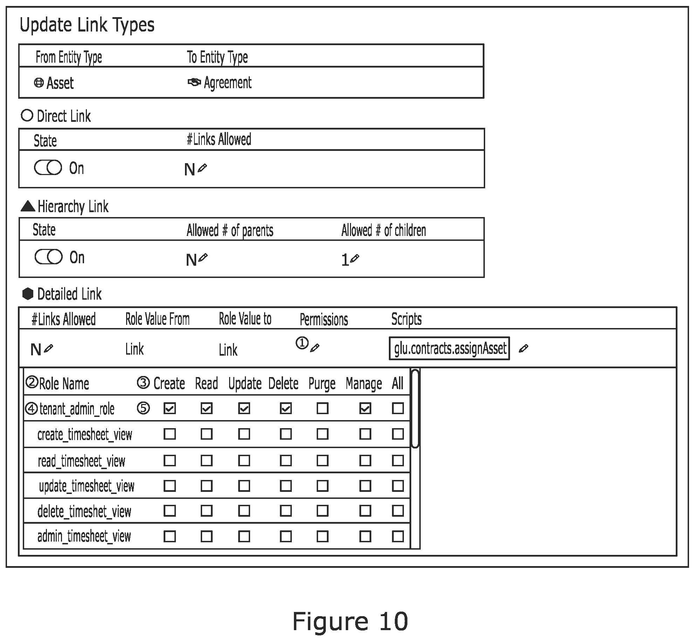

Figure 10 shows an example implementation of a maintenance view to create, edit, or visualise a relationship managed by the link field matrix of Figure 9.

### Detailed Description

While certain specific features are illustrated in the above figures, those skilled in the art will appreciate from the present disclosure that various other features have not been illustrated for the sake of brevity and so as not to obscure more pertinent aspects of the implementations disclosed herein.

### 1. Data Model

For brevity and clarity, the data management system of the preferred embodiment will be referred to henceforth as the "Data Management System".

Data modelling aims to illustrate the types of data used and stored within an information system, the relationship amongst these data types, the ways the data can be grouped and organised and its formats and attributes. An Entity Relational Model is a model for identifying entities to be represented in a database and representation of how those entities are related.

An entity is a thing which can be distinctly identified. Specifically, it is a thing about which an information system collects information (e.g. a person, a bank account, a building). An entity type is a group of things with the same properties. An entity instance is a single occurrence of an entity type. Each entity instance must be uniquely identifiable so it may be separately and distinctly identifiable from all other instances of that entity type. An attribute type is a property or characteristic. An attribute type describes the entity type to which it belongs and helps distinguish one entity type from another.

In a traditional database system, each entity type has a corresponding table with a variable number of rows and a fixed number of columns. The rows in an entity type table represent the instances of the entity type in the database; and the columns in an entity type table represent all the possible attribute types embraced by the database. However, a given entity type table may have several empty cells, because a given attribute type may not be relevant to that entity type. Thus, the entity type table in a traditional database may incur significant excess storage costs beyond what is required for the data contained therein. In addition, it can be difficult to determine whether an empty cell in an entity type table is empty, because the attribute type is not relevant to the entity type, or should instead include a null value, because the attribute is relevant to the entity type, but in a particular instance of the entity type, there is no measurement/reading available.

The Data Management System fundamentally changes how databases store an entity type's attributes. Specifically, in the Data Management System, an entity instance is simply a unique identifier defined in an entity table, accompanied by a pointer to its type. Each entity type's attribute contains a reference to this identifier and the data to be stored as that attribute. Unused or empty attributes are not stored in the database, eliminating the common confusion in databases about whether a null value is truly null or if it represents a non-existent value.

A relationship is a connection or association between either or both of entity types or instances thereof. For instance, an organisation may have a board of directors and employees. The organisation is an entity, as are the individuals comprising the board of directors and employees. One or more relationships may be established between the organisation and the people, using relationship attributes to define the nature of each relationship. For example, "organisation *employs* person," "person is *employed by* organisation," "person is a *Board Member* of organisation," and so on. It is important to note that in this example, the entities (person and organisation) need not store information about their respective relationships.

Relationships may also have attributes. For instance, start and end date attributes would allow searches like 'return all employees of an organisation between the specified dates'. In this case, the Data Management System only needs to search the relationships to find the relationship type of an employee with a relationship attribute within the given date range and that points to the specified organisation entity reference.

By defining relationships in this way, the Data Management System offers a much simpler mechanism for data searching. It also provides an explicit way to define both related data and the nature of the relationship between them. Additionally, it reduces the storage overhead compared to traditional databases.

Finally, as all relationships are defined consistently, there is no need to have several tables with associated JOIN operations - as would otherwise exist in a traditional database, which require multiple tables to support foreign key management, thus increasing the database complexity.

The Data Management System also enables traversal from any initial entity type of interest to any related entity types. For instance, when using a person as the initial focus, relationships would display all related entity types or entity instances to that specific individual (the first-degree relationships). Conversely, using an organisation as an initial focus, its related entities may include people, orders, invoices, and so on. This flexibility allows users to start at any point of interest and navigate through a data model, subject to access control measures.

A further aspect of the Data Management System introduces specialised entity types to optimise relationship management. These entity types have attributes that point to exactly one other entity type. This is useful for recording measurement observations without the overhead of a full relationship record.

Different entity types can appear on either side of a relationship. For instance, a customer can purchase any number of products, and a given product can be purchased by any number of customers. This is known as a many-to-many relationship. Similarly, one-to-many relationships can be illustrated as one person can have multiple credit cards, but each credit card belongs to just one person. The number of entity types on either side of a relationship (cardinality of the relationship) defines the fundamental constraints of the relationship.

The previously mentioned link field matrix defines the rules for entity type relationships and, optionally, any scripts or code that the Data Management System should execute when forming relationships. The link field matrix provides an easy way to define the credit card scenario mentioned earlier. In this case, a customer may have a 1:n relationship with credit cards, where each credit card has a 1:1 relationship with a customer. In another example, an organisation may have an n:n relationship with customers, and customers may have an n:n relationship with organisations. This is because an organisation may have many customers, and customers may deal with many organisations.

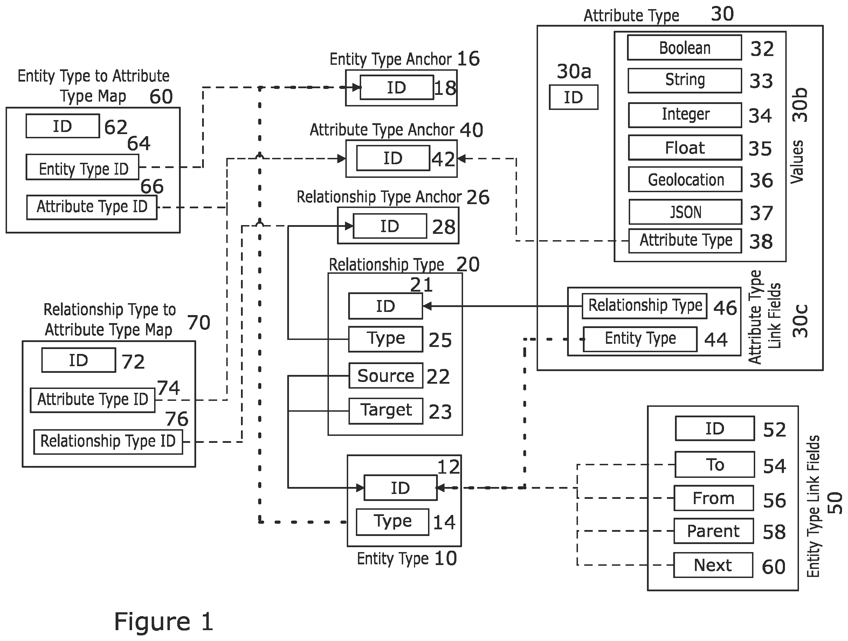

Referring to Figure 1, the Data Management System may comprise one or more entity types (10) coupled by one or more relationship types. In contrast with traditional database systems, the Data Management System does not create multiple entity type tables, one for each individual entity type. Instead, the Data Management System creates a single table for all the entity types in the database system.

An entity type (10) comprises a unique identifier (12) and an entity type classification (14). Thus, an entity type table comprises one or more rows each of which corresponds to an individual entity type; and two columns, the first of which comprises the unique identifier (12) for the entity type and the second of which comprises the entity type classification (14) for the entity type. Type classifications are also provided to attribute and relationship components of the data model to establish a taxonomy therefor. The entity type classification (14) of an entity type (10) may be coupled with an entity type anchor (16). An entity type anchor (16) acts as an anchor-point of the data model to enable grouping of data according to its entity types. An entity type anchor (16) may comprise a unique identifier (18) whose value substantially matches that of the entity type classification (14) with which it is coupled.

The Data Management System may further comprises one or more relationship type matrices (20) each of which is configured to represent a relationship type between the entity types (10). A relationship type matrix (20) may comprise a unique identifier (21), a source variable (22) and a target variable (23). The source variable (22) and the target variable (23) each have a value that substantially matches the unique identifier (12) of each entity type (10) involved in the relationship type represented by the relationship matrix (20). A relationship type matrix (20) may further comprise a relationship type classification (25) which describes the nature of the relationship between the entity types (10). For example, the relationship type classification (25) may have a value indicating that the relationship is an employment relationship, an ownership relationship, a positional relationship etc. The skilled person will acknowledge that these relationship types are provided for illustration purposes only. In particular, the Data Management System is in no way limited to the above-mentioned relationship types. On the contrary, the Data Management System is operable to represent any relationship type, such as familial relationships, purchase history relationships etc.

The relationship type classification (25) of a given relationship type matrix (20) may be coupled with a corresponding relationship type anchor (26) which in a similar manner to the entity type anchor (16), acts as an anchor-point of the data model, to enable grouping of data according to its relationship types. The relationship type anchor (26) may comprise a unique identifier (28) whose value substantially matches that of the relationship type classification (25) with which it is coupled.

In parallel to the previously mentioned entity type table, a relationship type table is a single table which lists all possible relationship types represented in the Data Management System. Take for example a relationship of type "Home". The relationship type links an entity type "Address" to an entity type "Person", thereby denoting the home address of a person. A relationship type does not link an entity type to an attribute type. This link is provided by an entity type to attribute type map (60) as will be described later.

The Data Management System may also comprise two forms of attribute types, namely:
- an attribute type (30) linked to an entity type (10) or a relationship type (20) therebetween; and
- attribute types within a relationship type (20), comprising for example pointers to individual entity types (10) (e.g. source variable (22) and target variable (23) for a given relationship type (20)).

Take for example an entity type "Person", an attribute type "Name" could be linked to that entity type. Similarly, in a relationship type "Friend", source and target attribute types within the relationship type refer to the two people involved in the friendship.

An attribute type (30) comprises a unique instance identifier (30a), an attribute type values unit (30b) and an attribute type link field unit (30c). These components enable an attribute type (30) to perform the following:
- create a link to an entity type and to an instance thereof,
- perform an action or script, or
- store a data value in its inherent format which may comprise Boolean, string, integer, floating point, geolocation or JSON.

The skilled person will recognise that the provided data formats are merely illustrative. Notably, the Data Management System is not restricted to these formats. On the contrary, the Data Management System is operable with any data value format.

The attribute type values unit (30b) may comprise one or more data type entries comprising one or more of a Boolean variable (32), a string variable (33), an integer variable (34), a floating-point variable (35), a geolocation variable (36) or a JSON or binary variable (37).

The attribute type values unit (30b) may also comprise an attribute type classification (38) which may be coupled with a corresponding attribute type anchor (40). In a similar manner to the entity type anchor (16) and the relationship type anchor (26), the attribute type anchor (40) acts as an anchor-point of a data model of the Data Management System, to enable grouping of data according to its attribute types. The attribute type anchor (40) may comprise a unique identifier (42), whose value substantially matches that of the attribute type classification (38) with which it is coupled.

The attribute type classification (38) may comprise a name combined with a suffix denoting a language name, or a dialect name to allow the identification and return of localised content (content specific to a geographic or cultural region) where available. Take for example a person entity type (10), with three attribute types (30) and corresponding three attribute type classifications (38), namely, "Name_En", "Name_FR" and "Name_ES". The three attribute types (30) of the person entity type (10) may each then have string variable (33) and specific instances of the three attribute types (30) may comprise the values "Frank", "Francois" and "Franco" respectively. In this case, a response to a query regarding names, as will be described later, will return the details of entities whose attributes include a name of "Franco" only if the query includes the suffix "ES". Otherwise, the response will return the name without localisation. This feature allows the Data Management System to support multiple languages and dialects while maintaining a consistent underlying taxonomy of entities, attributes and relationships. It further avoids the necessity of storing databases in different languages, since language specific attributes need only be stored in circumstances where language and/or formatting is an issue. It is noteworthy that this localisation is distinct from that used in views or microservices, as these deal with field headings, page or entity titles within a view, and so on. This, therefore, enables user interfaces and services to provide language preferences; and enables data to be language specific.

An attribute type classification (38) can also refer to a base unit for any value. For example, this allows conversion and value storage from miles per hour to meters per second. Subsequent searches can look up values in MPH, KMH, or any other supported speed. This removes common database issues when dealing with different units of measure for attribute values.

The attribute type values unit (30b) may also comprise metadata comprising one or more flags denoting the security status of an attribute type linked with a given entity type. For example, a flag may indicate that the data corresponding with an entity type and its attribute types and relationship types with other entity types is encrypted. Similarly, the metadata may include a flag "external", which may cause an external database to be accessed for the retrieval of data therefrom or for the manipulation thereof as an attribute of an entity.

In another embodiment, as a replacement for the above-mentioned relationship type matrix (20), relationship types between entity types (10) may be represented as attribute types (30) of the respective entity types (10). In this case, the attribute type values unit (30b) may comprise two or more values forming an attribute type (30) denoting a relationship, wherein the values in the attribute type values unit (30b) correspond with the unique identifiers (12) of the entity types (10) involved in the relationship.

The attribute type link field unit (30c) may comprise metadata such as an entity type attribute type link field (44) and a relationship type attribute type link field (46). The entity type attribute type link field (44) may be coupled with the unique identifier (12) of an entity type (10), such that the value of the unique identifier (12) may substantially match that of the entity type attribute type link field (44). The relationship type attribute type link field (46) may be coupled with the unique identifier (21) of the relationship type matrix (20), such that the value of the unique identifier (21) may substantially match that of the relationship type attribute type link field (46). Accordingly, the entity type attribute type link field (44) and the relationship type attribute type link field (46) are effectively pointers to respective entity types and relationship types. But while the entity type attribute type link field (44) and the relationship type attribute type link field (46) potentially allows an attribute type to be linked to any entity type or any relationship type in a data store, from a business perspective, attribute types should only be linked to entity types or relationship types that make sense for the given business.

The entity type attribute type link field (44) allows for there to be multiple "named" references to the same entity type. Take for example, an entity type (10) with an entity type value of "speed", thereby indicating that the entity type (10) in question pertains to speed. The entity type (10) may have unique identifier (12) of value 1 (in other words, Entity ID:1) and may have three attribute types (30), each with a different attribute type classifications (38) for example, miles per hour, kilometres per hour and meters per second; and corresponding integer or float values (34, 35) etc.

The attribute type link field unit (30c) enables an attribute type to be associated with one or more entity types (10) and relationship types (20). As a result, the attribute type link field unit (30c) may be configured to support multiple relationship types (20) between entity types (10). For example, a person could be a Director, an employee, and a tea-boy in the same organisation. In this case, Person and Organisation are the two entity types related, and there are three relationship types between the two entity types. In addition to supporting the functionality provided by traditional SQL and NoSQL databases, the attribute type link field unit (30c) may also support relationships between entity types (10), in a similar way to an augmented graph database. More specifically, an attribute type link field unit (30c) may support taxonomic searches by the type of an entity, attribute, or relationship.

In the embodiment in which, as a replacement for the relationship type matrix (20), a relationship type between entity types (10) is represented by attribute types (30) thereof, the presence of any such attribute type (30) may also cause the creation of an attribute type link field unit (30c) comprising a corresponding relationship type entry in the corresponding relationship attribute type link field (46). This allows the performance of the Data Management System to be maintained on searching indexes for relationships, because it is only necessary to search the attribute types (30) for the presence of a relationship type in these instances.

Both the entity type attribute type link field (44) and the relationship type attribute type link field (46) may abide by a plurality of rules whose effect is to reduce relationship overheads and mitigate the relationship/edge data cost associated with traditional graph structures, because it is no longer necessary to integrate through a graph to find all associated entities. More applicable to mutation queries, the rules control what users can do to change the content of the Data Management System and/or external data stores; and operate with an error handler of the Data Management System to ensure the consistency of the data contained therein.

A first rule requires the entity type attribute type link field (44) and the relationship type attribute type link field (46) to operate unidirectionally. Thus, the process of linking an entity type or a relationship type with a corresponding attribute type thereof does not impact the entity type or relationship type itself.

A second rule requires a given relationship type attribute type link field (46) to only comprise details of the relationship type with the entity type (10) identified by the entity type attribute type link field (44). In other words, the relationship type attribute type link field (46) may not contain details of relationship types established with other entity types (10). The purpose of this second rule is to maintain the isolation of individual entity types (10) from the other entity types (10). Take for example a healthcare employees database in which an entity type may be a support worker. A support worker entity type may have multiple attributes, for example, security vetting and level of certification. In this case, the second rule allows searching of the healthcare employees database for all support workers with a required level of certification without disturbing any of the entries in the attribute type link field unit (30c).

The embodiment in which, as a replacement for the relationship type matrix (20), a relationship between entity types (10) is represented by attribute types (30) thereof, effectively allows an attribute type (30) to reference other entity types (10) or attribute types (30). However, further embodiments may require each of an associated group of attribute types (30) to have a unique identifier before permitting an attribute type (30) to directly reference one or more of the other attribute types (30).

A third rule requires the entity types, attribute types, and relationship types of individual entity type attribute type link fields (44) and relationship type attribute type link fields (46) of a given attribute type link field unit (30c) not to be impacted by the presence of other attribute type link field units (30c).

Relationship type attribute type link fields (46) can support a variety of common data models to control the structure and ordering of relationships between entity types (10). As the attribute type link field unit (30c) is configured to support multiple relationship types between entity types (10), it implies that the structures of these relationship types and the ordering thereof may also be represented concurrently in the attribute type link field unit (30c).

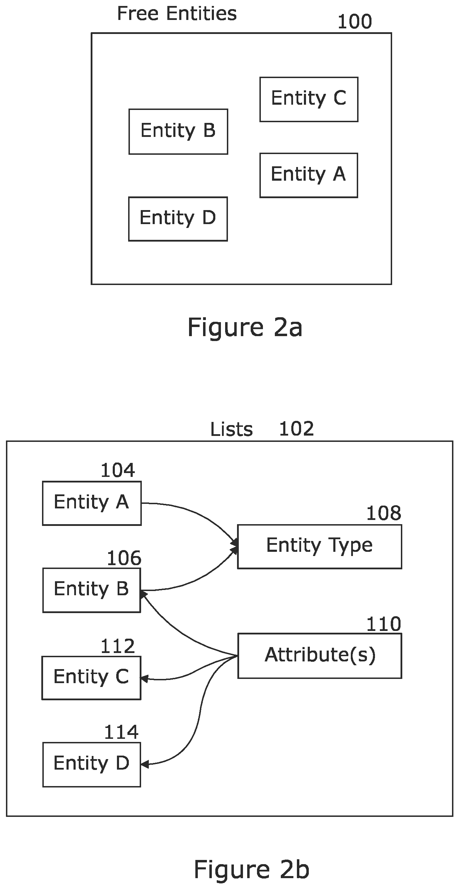

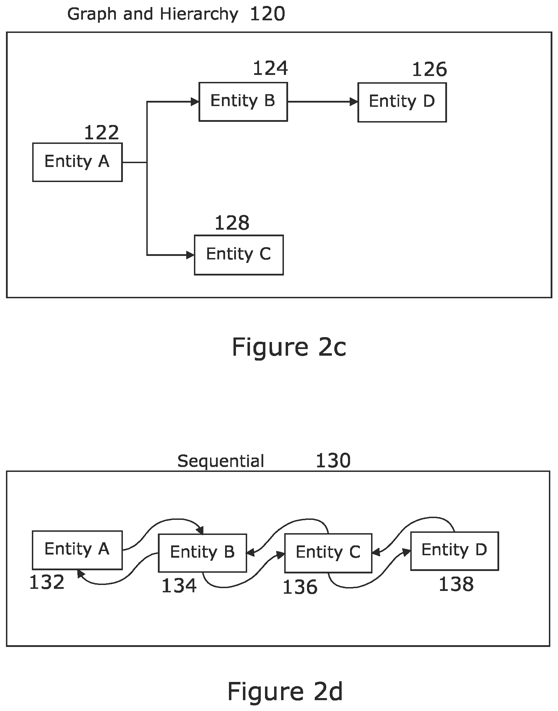

Consider an example comprising four entity type instances, which will be referred to henceforth as "entities". The four entities are Entity A, Entity B, Entity C and Entity D. Figure 2a depicts a scenario in which no relationships exist between the four entities. In this scenario and referring to Figure 2a together with Figure 1, each entity remains 'floating'. Searches will return these 'free entities' in response to key-value queries which target specific entity identifiers. Referring to Figure 2b and Figure 1, the Data Management System can also operate as a conventional database, returning a list (102) of entities based on results of queries targeting entity identifiers (104, 106) or entity types (108), or attribute types (110) linked to entity identifiers (106, 112, 114) in the attribute type link field unit (30c). Similarly, referring to Figure 2c and Figure 1, the Data Management System may also support graph and hierarchical data.

In an analogous manner to the entity type table and relationship type table discussed above, an attribute type table is a single table that lists all the attribute types represented in the Data Management System. Specifically, the attribute type table only lists attributes linked to an entity type. While, the attribute type table does not include attribute types within a relationship type, should additional contextual information (e.g. start date/end date) be required for a given relationship type, the additional contextual information is included as an attribute type within the attribute type table.

Take for example a database system comprising forty three different attribute types, wherein only ten of the attribute types are relevant to a given entity type. In the Data Management System, a row in the entity type table representing the entity type is linked to a subset of all the attribute types. The subset comprises the ten attribute types relevant to the entity type in question. The linking of the entity type to the subset of attribute types is provided by the entity type to attribute map (60) as will be described below.

Returning to Figure 1, an entity type (10) may also be coupled with an entity type link field unit (50). An entity type link field unit (50) may comprise a unique identifier (52), a "To" link (54), a "From" link (56), a "parent" link (58) and a "next" link (59). These entries are effectively forward and reverse pointers to individual entity types and instances thereof, allowing a query process to proceed directly from a first entity to a second entity as shown in Figure 2d, rather than going from the first entity to an attribute and from there to a relationship to the second entity. Thus, the entity type link field unit (50) enable a multiplicity of concurrent data representations (free entities, stacks, heaps, linked lists, graphs, hierarchical, sequential and others), such that an entity may exist in several representational models at the same time. This allows a same entity to appear in different representational models, depending on the context in which the data is required.

The attribute type link field unit (30c) may be configured to provide links to data stored on systems or within services external to the Data Management System. The plurality of concurrent data representations enabled by the entity type link field unit (50) are also achievable with data stored in a plurality of data sources. For example, a linked list may be created of entities physically stored in multiple locations, or systems.

The entity type link field unit (50) may abide by rules analogous to those mentioned above and followed by the entity type attribute type link field (44) and the relationship type attribute type link field (46) of the attribute type link field unit (30c). Through these rules, the entity type link field unit (50) provides a non-destructive way of relating entity types (10) without affecting them or other entity types (10) in the Data Management System. Without an entity type link field unit (50), it would be necessary to modify unrelated entity types (10) and the software applications organising them to establish relationships between the entity types. For instance, in a traditional SQL database, adding foreign-key tables bridges entity types and their instances. Complex 'joins' between tables and controls are needed to access these fields and tables. However, this could disrupt other database areas.

However, the entity type link field unit (50) may allow the creation of a collection entity type which may be an arbitrary assembly of otherwise unrelated entity types (10). Collection entity types provide a way of grouping diverse data types without impacting their properties or behaviours. A collection entity type may also have its own corresponding attribute types. For brevity and clarity, each attribute type of a collection entity type will be referred to henceforth as a "collection type attribute". However, a collection type attribute does not modify the attribute types of the individual entity types from which the corresponding collection entity type is formed. Since entity types and their attribute types and relationship types are not impacted by the entity types' membership of a collection entity type, it does not limit their interactions on an individual basis. Take for example, a body of data containing the entity types "Customers," "Products," and "Stores." A collection entity type named "Purchases" may be created with attribute types such as purchase date, or category data such as retailer, partner etc.

The entity type link field unit (50) and the relationship type matrix (20) may also permit relationship types to be defined between collection entity types, not just between the entity types, attribute types, or relationship types within them. This may provide enhanced facilities for data modelling and analysis. Similarly, collection entity types may also be nested, to create collection entity types within collection entity types. This can help with the management and organisation of complex data structures, especially those comprising hierarchical or multilevel relationships.

The Data Management System may support the dynamic creation of collection entity types, to group entity types, attribute types, or relationship types based on arbitrary user demands, real-time criteria or conditions. This is helpful in use-cases like on-the-fly grouping, sharing, publication, monitoring, anomaly detection, or advanced data analysis. For clarity, sharing is the process of sharing a collection of things by a first person with a second person, allowing the second person to interact with that collection. Publication is the process of creating a PDF or a web-page from the collection. Thus, while sharing and publication use the same broad mechanisms, they have different outcomes.

Similarly, the Data Management System may also use a version attribute (or automatic depreciation) to set the start and end dates of any entity type, attribute type or relationship type. For example, person A was an apprentice from startDate to endDate and a team member from the next startDate. The use of dates in this manner support versioning of collections, to allow changes in a collection or its individual members to be tracked over time. This could be useful for auditing, recovery, and historical analysis purposes.

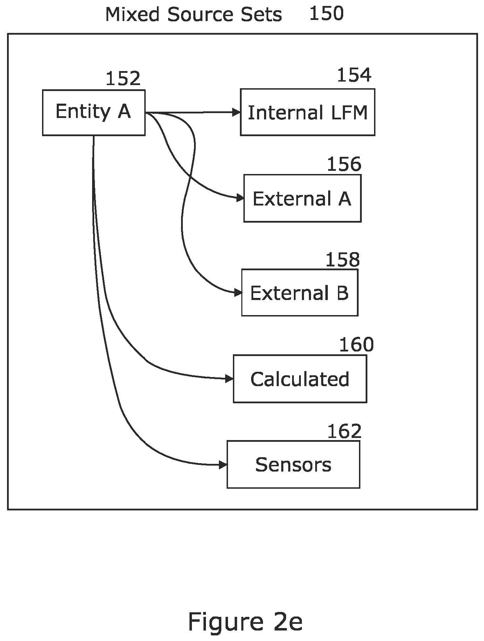

Referring to Figure 1 and Figure 2, the complexity of the attribute types (30) in the Data Management System results in high storage costs. To address this, the data represented by the Data Management System, may be stored on a different storage device to that of a client application (not shown). Indeed, in some cases, it may be useful to store data outside of the Data Management System, in which case, any or all of the entity type attribute type link field (44), the attribute type classification (38) and the relationship type attribute type link field (46) of an attribute type (30) may be configured to point to external data storage devices. Using this approach, the Data Management System may contain information which permits the identification of the source of a body of data thereby enabling its updating by resolvers, as will be discussed later, to ensure synchronicity of data entities and attributes between otherwise disparate systems.

In a further extension of this principle, an entity type (10) could be linked with multiple attribute types (30) each of which is configured to point to different data sources. Specifically, referring to Figure 2e, an entity (152) may comprise data from within the Data Management System combined with data from external databases or systems (156, 158) and values (160) calculated or scripted from these sources by scripts run in the back end when triggered by a resolver. Alternatively, an entity (152) may comprise data from within the Data Management System combined real-time sensor data (162).

Returning to Figure 1, the Data Management System may also comprise an entity type to attribute type map (60). The entity type to attribute type map (60) links entity types and attribute types together. Specifically, since a given entity may possess one or more attributes, the entity type to attribute type map (60) enables each row in an entity type table to point to one or more rows in an attribute type table. This implicitly creates a definition for the entity type, by establishing all the attribute types relevant thereto. Take for example, an entity of type "Person", the linking entries in the entity type to attribute type map (60) provide certainty that the person entity type only has person-related attribute types.

The entity type to attribute type map (60) may comprise a unique identifier (62) and an entity type identifier (64). The entity type identifier (64) may be coupled with the unique identifier (18) of a corresponding entity type anchor (16), such that the entity type identifier (64) has a value which substantially matches that of the entity type classification (14) to which the corresponding entity type anchor (16) is coupled.

The entity type to attribute type map (60) may also comprise an attribute type identifier (66) which may be coupled with the unique identifier (42) of a corresponding attribute type anchor (40), such that the attribute type identifier (66) may have a value which substantially matches that of the attribute type classification (38) of the attribute type (30) to which the corresponding attribute type anchor (40) is coupled.

The Data Management System may also comprise a relationship type to attribute type map (70). This defines the attribute types allowable for a given relationship type, in accordance with the previously mentioned rules for the attribute type link field unit (30c). The relationship type to attribute type map (70) may comprise a unique identifier (72) and an attribute type identifier (74). The attribute type identifier (74) may be coupled with the unique identifier (42) of a corresponding attribute type anchor (40), such that the attribute type identifier (74) has a value which substantially matches that of the attribute type classification (38) of the attribute type (30) to which the corresponding attribute type anchor (40) is coupled. The relationship type to attribute type map (70) may also comprise a relationship type identifier (76) which may be coupled with the unique identifier (28) of a corresponding relationship type anchor (26), such that the relationship type identifier (76) may have a value which substantially matches that of the relationship type classification (25) of the relationship type matrix (20) to which the corresponding relationship type anchor (26) is coupled.

Collectively, the attribute type link field unit (30c), the entity type link field unit (50), the entity type to attribute type map (60) and the relationship type to attribute type map (70) form a "link field matrix", whose function will be described below.

### 2. Data Management Method

The method of data management can be broadly decomposed into a data modelling component and a query, search and retrieval component. Each of these will be described in turn below and then later combined in an overarching overview of the data management method.

### 2.1 Data Modelling Component of a Data Management Method

The data modelling component of a data management method can be broadly divided into two phases. The first phase relates to establishing a broad definition of the data model and the second phase relates to refining the data model. Each of these phases will be described in more detail below.

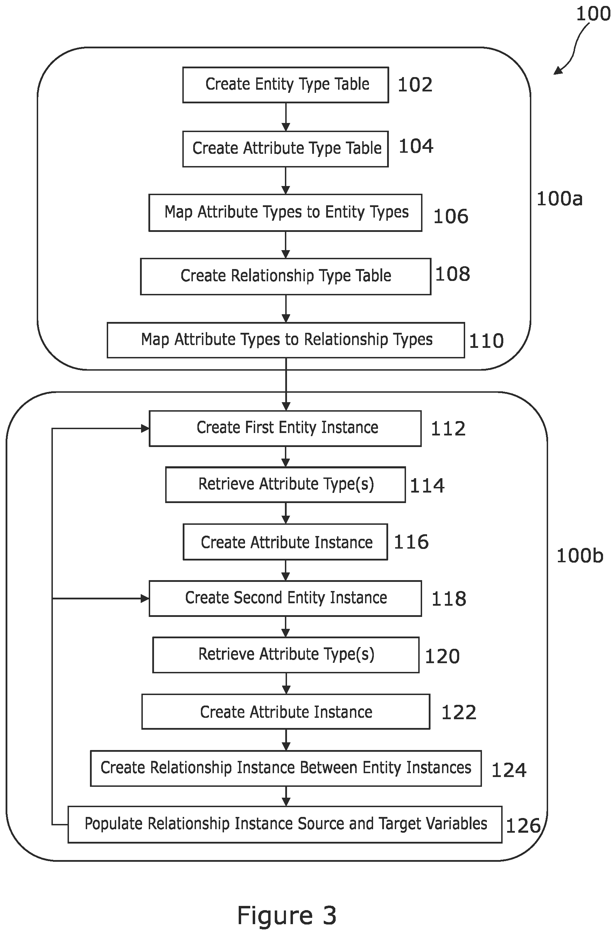

Referring to Figure 1 and Figure 3, the first phase (100a) of the data modelling component of the data management method comprises the steps of:
- creating (102) an entity type table (not shown), listing all possible entity types (10) for an application;
- creating (104) an attribute type table (not shown), listing all possible attribute types (30) for all the entity types (10) and relationship types (20) addressed in the application;
- mapping (106) the attribute types (30) to the entity types (10) in the entity type to attribute type map (60);
- creating (108) a relationship type table (not shown) listing all the types of relationships (20) addressed in an application, wherein a relationship is between individual entities or individual entity types (10); and
- mapping (110) the attribute types (30) to the relationship types (20) in the relationship type to attribute type map (70).

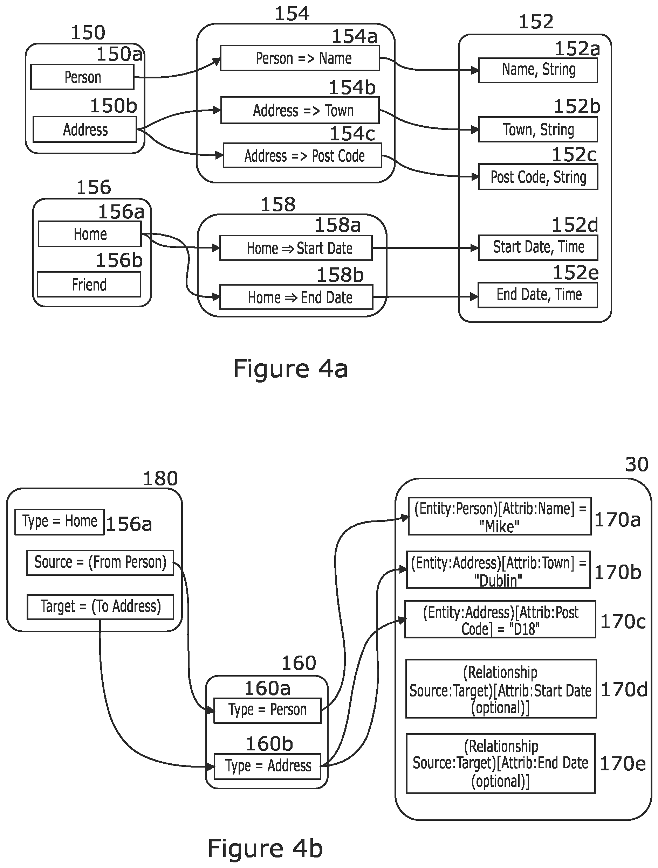

Referring to Figure 1 and Figure 4a, in an example, an entity type table (150) comprises two entity types (10). The first is a "Person" entity type (150a); and the second is an "Address" entity type (150b). Similarly, an attribute type table (152) comprises three attribute types (30) linked to the above entity types (10). The first attribute type (30) is a "Name" attribute type (152a) which comprises a string variable. The second attribute type (30) is a "Town" attribute type (152b) which also comprises a string variable; and the third attribute type (30) is a "Post Code" attribute type (152c) which further comprises a string variable.

An entity type to attribute type map (154) comprises three mappings. The first mapping (154a) couples the "Person" entity type (150a) with the "Name" attribute type (152a). The second mapping (154b) couples the "Address" entity type (150b) with the "Town" attribute type (152b). The third mapping (154c) couples the "Address" entity type (150b) with the "Post Code" attribute type (152c). In other words, the entity type to attribute type map (154) provides a one to one coupling of the "Person" entity type (150a) with the "Name" attribute type (152a); and a one to two coupling of the "Address" entity type (150b) to the "Town" attribute type (152b) and the "Post Code" attribute type (152c).

A relationship type table (156) comprises two relationship types (20). The first relationship type (20) is a "Home" relationship type (156a) between a "Person" entity type (150a) and an "Address" entity type (150b), thereby denoting that the address is the home address of the person. The second relationship type (20) is a "Friend" relationship type (156b) between one "Person" entity type (150a) and another "Person" entity type (150a).

The previously mentioned attribute type table (152) also comprises two attribute types (30) linked to at least some of the relationship types (20). These attribute types (30) may add contextual information to a relationship. The first of these attribute types (30) is a "Start Date" attribute type (152d) which comprises a time variable. The second of the attribute types (30) is an "End Date" attribute type (152e) which also comprises a time variable. Together these first and second attribute types (152d, 152e), define a time window for a given relationship type (20).

A relationship type to attribute type map (158) comprises two mappings. The first mapping (158a) couples the "Home" relationship type (156a) with the "Start Date" attribute type (152d). The second mapping (158b) couples the "Home" relationship type (156a) with the "End Date" attribute type (152e). In the present example, this indicates that the relationship between a person and their home address is time-bounded (i.e. has a start and end date).

The second phase (100b) of the data modelling component of the data management method comprises the steps of creating (112) a first entity instance using one of the pre-defined entity types (10) from the first phase (100a); and providing (not shown) a value for an identifier for the first entity instance. This is followed by the step of retrieving (114) one or more attribute types (30) for the entity type (10) of the first entity instance. Specifically, because the entity type (10) of the first entity instance is known, the entity type to attribute type map (60) can be interrogated to find all the corresponding available attribute types (30) of the respective entity type (10).

For brevity and clarity, an attribute instance is a single occurrence of an attribute type.

The second phase (100b) comprises the next steps of:
- creating (116) an attribute instance for the first entity instance on receipt of a value for a corresponding retrieved attribute type (30);
- creating (118) a second entity instance using another one of the pre-defined entity types (10) from the first phase (100a) of the method (100); and providing (not shown) a value of an identifier of the second entity instance.

This is followed by the step of retrieving (120) one or more attribute types (30) for the entity type (10) of the second entity instance. In a similar manner to the first entity instance, because the entity type (10) of the second entity instance is known, the entity type to attribute type map (60) can be interrogated to find all the corresponding available attribute types (30) of the respective entity type (10).

The second phase (100b) comprises the next steps of:
- creating (122) an attribute instance for the second entity instance on receipt of a value for a corresponding retrieved attribute type (30);
- creating (124) a relationship instance between the first entity instance and the second entity instance; and
- populating (126) the source and target variables of the relationship instance with the value of the identifier of the first entity instance and the value of the identifier of the second entity instance respectively.

The data modelling component of the data management method may include a further step of repeating the above-mentioned steps (112) to (126) of the second phase (100b), for as many entities as required to be maintained in the Data Management System. Alternatively or additionally, the data modelling component of the data management method may comprise a further step of repeating steps (118) to (126) so that a new second entity instance is created and a relationship established between it and a pre-existing first entity instance.

Referring to Figure 1, Figure 4a and Figure 4b, in an example of the second phase (100b) of the data modelling component of the data management method, a first entity instance (160a) is created of entity type "Person" (150a). It is determined from the entity type to attribute type map (60), that the entity type "Person" (150a) is coupled with the attribute type "Name" (152a). On receipt by the Data Management System of a value of "Mike" for the "Name" attribute type (152a), a corresponding first attribute instance (170a), of type "Name" is created for the first entity instance (160a) and the value "Mike" is stored in the first attribute instance (170a).

A second entity instance (160b) is created of entity type "Address" (150b). It is determined from the entity type to attribute type map (60), that the entity type "Address" is coupled with the attribute types "Town" (152b) and "Post Code" (152c). On receipt by the Data Management System of a value of "Dublin" for the "Town" attribute type (152b) a corresponding second attribute instance (170b) of type "Town" is created for the second entity instance (160b) and the value "Dublin" is stored in the second attribute instance (170b). Similarly, on receipt by the Data Management System of a value of "D18" for the "Post Code" attribute type (152c), a corresponding third attribute instance (170c) is created for the second entity instance (160b) and the value "D18" is stored in the third attribute instance (170c).

A relationship instance (180) of relationship type "Home" (156a) is created between the first entity instance (160a), of entity type "Person" (150a) and the second entity instance (160b) of entity type "Address" (150b). This is done by the following steps:
- creating the relationship instance (180) of relationship type "Home" (156a);
- setting a source variable (22) of the relationship instance (180) to the value of the identifier (not shown) for the first entity instance (160a); and
- setting the target variable (23) of the relationship instance (180) to the value of the identifier (not shown) for the second entity instance (160b).

Optionally, in the present example, on receipt by the Data Management System of values of "1/1/2000" and "1/1/2025" for a start date and an end date respectively, for the relationship instance (180), two attribute instances (170d) and (170e) of types "Start Date" (not shown) and "End Date" (not shown) respectively are created for the newly created relationship instance (180). The value "1/1/2000" is stored in the first newly created attribute instance (170d) of type "Start Date"; and the value "1/1/2025" is stored in the second newly created attribute instance (170e) of type "End Date". In this way, a record may be established in the Data Management System which, in the present example, demonstrates that a person called "Mike" had a home address in "Dublin" and at postcode "D18" between the dates of 1/1/2000 and 1/1/2025.

The start date and end date attribute instances (170d, 170e) are only created if the values thereof are offered to the Data Management System. The same is true for all the other attributes of entity instances or relationship instances in the Data Management System. Thus, and in contrast with traditional database systems, storage space is not consumed in the Data Management System in the event the data values for the attributes of a given entity instance or a given relationship instance are not provided.

In a further extension of the present example, a third entity instance (not shown) is created of entity type "Person" (150a). On receipt by the Data Management System of a value of "John" for the "Name" attribute type (152a), a corresponding fourth attribute instance (not shown), of type "Name" is created for the third entity instance (not shown) and the value "John" is stored in the fourth attribute instance (not shown).

A second relationship instance (not shown) of relationship type "Friend" (156b) is created, the source variable (22) of the second relationship instance (not shown) is set to the value of the identifier for the first entity instance (160a); and the target variable (23) of the second relationship instance (not shown) is set to the value of the identifier for the third entity instance (not shown). Thus, a relationship instance (not shown) of relationship type "Friend" (156b) is created between the first entity instance (160a), of entity type "Person" (150a) and the third entity instance (not shown) of entity type "Person" (150a). In this way, the Data Management System represents that "Mike" is a friend of "John".

As will be discussed below, the link field matrix enforces any required business rules, so that, for example, it is only possible to establish a "friend" relationship between two entity instances of type "Person" (150a). In addition, it is not possible to add attributes, such as start date and end date, to the relationship instance, because the "Friend" relationship type (156b) does not have corresponding entries in the relationship type to attribute type map (70).

The skilled person will acknowledge that the above-mentioned examples of refining the data model of the Data Management System are provided for illustration purposes only. Specifically, the skilled person will acknowledge that the Data Management System and the data modelling component of the data management method are in no way limited to the details shown in these examples. On the contrary, the Data Management System and the data modelling component of the data management method are operable to represent any entity types, attributes or relationship types and instances thereof, together with any mappings therebetween as required by a given use case.

Theoretically, the Data Management System allows any entity instance of a given type to have some form of relationship with any number of other entity instances of the same or other types. However, this flexibility could become too complex to manage. To address this, the link field matrix controls how links between entity types are created, managed, and deleted. Specifically, the link field matrix enables the Data Management System to enforce business rules that allow, limit, or prohibit relationships between any entity types.

To do this, the Data Management System applies rules whenever an entity instance is created, updated, or deleted. These events trigger a function that examines the proposed action (create, update, delete), calculates the changes required by these events, and then compares the resulting proposed changes to the limits imposed at the intersection of source and target entity types in the link field matrix. As part of this process, the link field matrix may indicate that any data changes would trigger a process specified in a script. This allows the Data Management System to apply complex rules that go beyond a basic constraint on the number of relationships any entity type may have. Such a rule might be that a particular person can only assign a Neurosurgeon with a specific discipline or qualifications to oversee a neurosurgery medical case.

### 2.2 Query, Search and Retrieval Component of the Data Management Method

The second component of the data management method involves querying, modifying, searching, and retrieving data using the Data Management System. These operations are undertaken by co-designed resolver and traversal processes which will be described in more detail below.

### 2.2.1 Resolver Process in the Query, Search and Retrieval Component of the Data Management Method

### 2.2.1.1 Overview

A resolver is a function, set of rules or specification of logic that prescribes how an input (e.g. identifier, attribute etc.) is to be turned into a result. For example, a resolver may specify how a data item is to be identified, retrieved, derived, or otherwise obtained from a data source. Thus, a resolver acts as a bridge between queries generated by software applications and one or more data stores.

Resolution is the process by which a system, applying a resolver, evaluates a provided input against one or more data sources to produce a determinable output (for example, a row, entity, aggregate, or "not found/unauthorized" outcome). A resolver task is a discrete, identifiable unit of work that instructs a system to perform resolution by referencing a resolver and supplying specific inputs with a handle for scheduling, tracking, retrying and auditing that work. A resolver instance is the runtime embodiment of a resolver (and, where applicable, of a resolver task's inputs and directives) created for the purpose of performing resolution within a particular execution context. A resolver instance is operational in nature and is the mechanism by which the resolver's logic is invoked to perform actual resolution.

Resolvers can be operated (as resolver tasks or resolver instances) independently or as part of an interconnected chain. In doing so, they provide security controls, localisation, and support for application-specific behaviours.

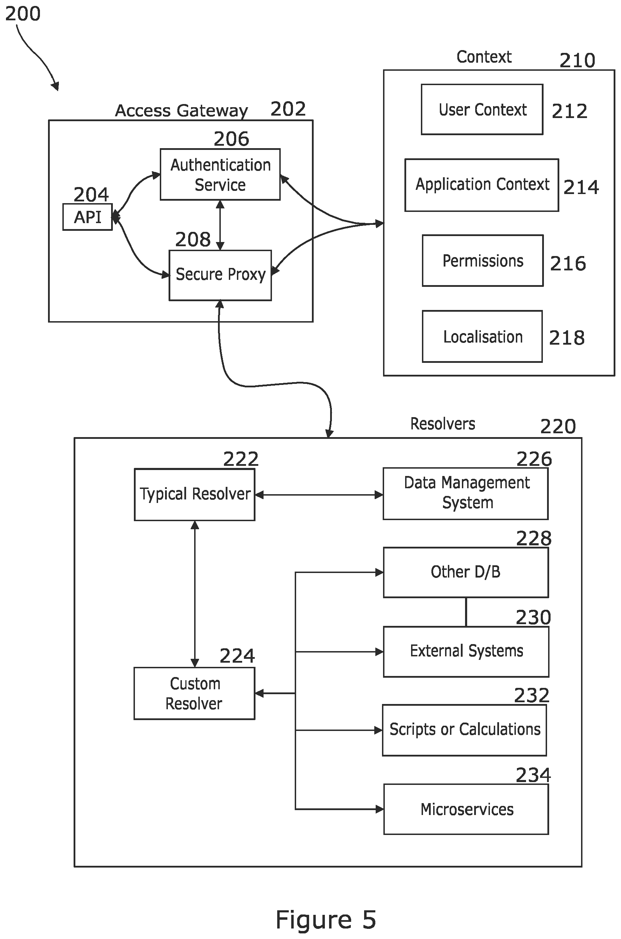

Referring to Figure 5, in an exemplary software environment (200), an access gateway (202) comprises an applications programming interface (204) configured to control access to data in the Data Management System. The access gateway (202) further comprises an authentication service (206) configured to validate application and user credentials of API requests received from a client application (not shown). On receipt of application and user credentials for a first time by the access gateway (202) and the validation of the credentials by the authentication service (206), the access gateway (202) is configured to generate a private context (210) which is specifically associated with the API request.

A context is transient, existing solely for the lifespan of a specific user, application or network session. During this period, a context (210) is confined to specified components of the software environment. A typical context (210) may comprise session information of users (212) and applications (214); and one or more permissions definitions (216) configured to support role, group or individual data or service access controls. A context (210) may also comprise localisation information (218) to support multilingual capabilities.

The access gateway (202) may further comprise a secure proxy (208) configured to validate all subsequently received API requests from a same user and application against the corresponding context. API requests whose credentials match those of the context (210) are forwarded together with it, to one or more resolvers (220). A request may also be generated from an internal process, a script, or a message received by another part of the Data Management System and the client application (not shown).

For brevity, a resolver of the Data Management System will be referred to henceforth as an "LFM resolver (220)". An LFM resolver (220) may comprise one or more other typical resolvers (222) and custom resolvers (224). This allows an LFM resolver (220) to handle graph-like queries in which a single query can access both the Data Management System (226) and data sources (228). The data sources may comprise one or more of a local store of data and a remote source of data. Accessing a remote source of data may require an LFM resolver to access one or more external systems (230). LFM resolvers (220) may also implement scripts (232) and microservices (234). LFM resolver tasks may also run concurrently, reducing the time required to complete any query or mutation.

An incoming request (not shown) received by an LFM resolver (222) may include one or more queries or mutations to change data. For brevity and clarity, the term "query" may refer to either a query or mutation. A query may encompass several elements. For example, a query could comprise:
- retrieving name and address data from the Data Management System (226);
- accessing a current status of an order from a sales order database or another similar source (228);
- obtaining a planned product delivery time-slot from a courier tracking sensor or another external system (230);
- performing a calculation to determine a total value of all orders scheduled for a delivery, using scripts or calculation resolvers (232); and
- ascertaining a current customs import duty as managed by a specialised micro-service.

On receipt of a query, by the Data Management System, either a resolver instance is invoked with the request-derived inputs and context; or a resolver task is created which, when executed, invokes a resolver instance with the request-derived inputs and context.

Hooks provide a way to insert custom logic into a standard transaction process, offering customisation without altering the core system. They allow the insertion of security checks, scripts, and auditing into queries without changing their outcome or intent. This aids in data store modification, monitoring, debugging, and extending functionality. Hooks operate before, after, and during transactions:
- *Before a transaction begins:* Hooks can set up conditions or check preconditions.
- *After a transaction begins*: Hooks can log the start or initiate related processes.
- *Before a transaction commit:* Hooks can enable custom validation, modification, or cancellation.
- *After a transaction commit:* Hooks can log the outcome, notify other systems, or trigger follow-up actions.
- *On transaction rollback:* Hooks can handle cleanup or logging.

Thus, the Data Management System may execute configured hooks at one or more of the following points: upon receipt of the query, upon creation of a resolver task, upon execution of a resolver task, immediately before invocation of a resolver instance, immediately after such invocation, and upon completion of any resolver task or resolver instance.

Hooks can also implement security controls, ensuring each resolver task or resolver instance executes within the defined security context and can operate on any resolver, script, entity, type, attribute, or relationship. Each resolver (220) or resolver task applies security controls at user, group, and role levels, providing a consistent security model for every attribute, entity, and relationship within the Data Management System. This security model may also apply to externally resolved entities and collections, providing a consistent security model for queries within and outside the Data Management System.

### 2.2.1.2 Detailed Resolver Process - Resolving a Script or Calling an External System

The Data Management System provides a consistent, single point of access for performing calculations specified by scripts on multiple data sets, without users needing to know the data source. It also allows users to analyse data sets and gain deeper insights than individual data stores would provide. Additionally, it offers a single, consistent view of data from the Data Management System and external systems, making it easier to visualise and understand data relationships.

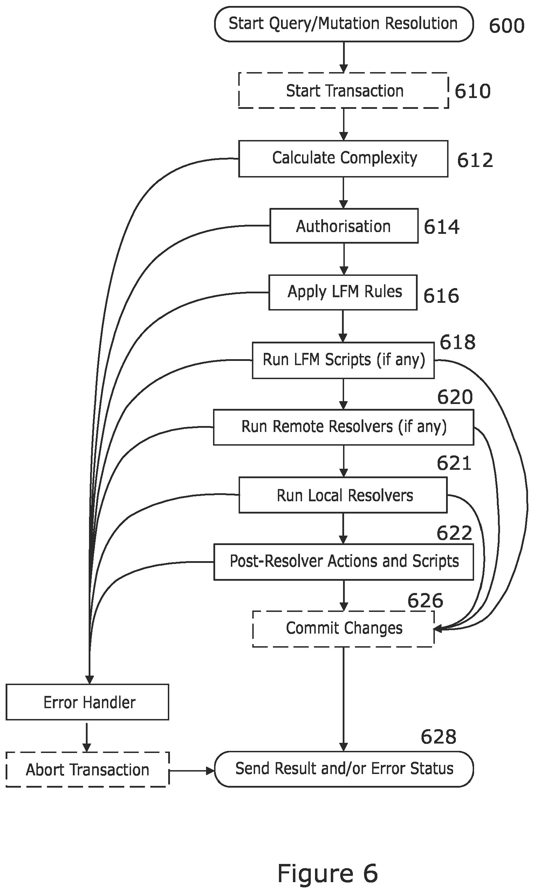

Referring to Figure 6, on receipt of a request, the Data Management System analyses (600) it; and creates and commences (610) a transaction to group multiple database events together in a manner that allows the data management method to revert changes should something go wrong.

To prevent system overload, a pre-parser (not shown) calculates the query complexity and rejects those that would consume too many resources. Specifically, a resolver instance may refine and calculate the complexity 'cost' (612) at a corresponding level of the query. Instances of preceding resolvers for the transaction may also calculate the total costs of the higher levels of the query. If the combination of these calculated costs exceeds a given threshold, the current resolver instance and all associated resolver instances are terminated, thereby cancelling the overall query and triggering a transaction roll-back to ensure integrity of the Data Management System. However, if the combined costs at a given level of the query and the higher levels thereof are equal to or less than the threshold, the current resolver instance and all associated resolver instances may continue with their operations.

Referring to Figure 1 and Figure 6, following additional authentication (614) (if necessary, for example, to ensure that a given user is authorised to access the information they are requesting), a resolver applies (616) rules of the attribute link field unit (30c) to enforce business requirements. These rules apply predominantly to mutation queries, ensuring any entity and associated relationships conform to defined rules.

Resolvers can then run scripts (618), if required. Scripts can, for example, calculate a value and return the result as if it were an entity, relationship, or attribute thereof. A received query can request a combination of entities, relationships, and attributes without knowing whether they are contained in a physical data store, an external system, or calculated as required. For this part of a hook, scripts can return an error (triggering a transaction roll-back), pass results or modify data within the current resolver context, or cancel the remaining hooks in the current resolver thread, returning a result as if the remaining steps had completed normally (and satisfying the transaction integrity requirements).

For clarity and brevity, a resolver instance that calls an external system (for example through an API), will be referred to henceforth as a "remote resolver". Similarly, a resolver instance that calls the Data Management System will be referred to as a "local resolver".

If required, a remote resolver may be run (620) on an external system, returning the result of its operation to the caller. Three completion paths exist for remote resolvers: an error of some form occurred (triggering transaction roll-back); completion of the task, returning the result of the external system call to the remote resolver without further processing; or following a successful external system interaction, the resolver thread may continue until it has exhausted all remaining steps/hooks. Local resolvers may then be run (621) to interrogate the underlying database or call-specific logic within the platform to obtain a response to the query.

Resolver instances only return the data requested. Asking, for example, for a person's surname and title will only return the surname and title attributes for a person entity. This removes any redundant data transfers and reduces memory requirements, network load, and any associated processing activity overheads.

Finally, any post-resolver processes may be run (622) before the resolver thread completes. When all sub-resolver instances complete successfully, the top-level resolver tasks/instances commits (626) the entire transaction to a database and returns (628) the result of the resolver task/instance, to a process that assembles the data from each resolver task/instance and sub-resolver task/instance into a single unified response to the calling process.

### 2.2.2 Traversal Process in the Query, Search and Retrieval Component of the Data Management Method

Whereas a resolution is the end-to-end process of applying resolver logic to inputs to produce an outcome, a traversal is a technique in which relationships are followed to discover related data. Thus, a resolver may perform a traversal as part of its resolution logic when the required data is reached by following relationships.

Traversal is the process of starting from one or more specified starting nodes or records (also known as a "seed") and systematically following one or more defined relationships involving the records/nodes, in one or more steps, to identify and return the related records/nodes reached, together with the relationships followed, and/or the paths taken, subject to any stated limits, filters, and stopping conditions. For example, a traversal query could be "identify all managers above employee 252 (5 hops)" or "identify all friends within 3 hops of Alice " or "identify all components of a product, to create a bill of materials" or "identify all past owners of car registration number XYZ556".

A traversal plan is the explicit, executable description of how to perform a traversal to answer a query. Specifically, a traversal plan comprises the ordered steps, rules, and constraints used to follow relationships from the seed to produce the requested result. Materialising a traversal means computing the results of a specified traversal plan over applicable data relationships; and storing the results, so they can be retrieved or reused without re-performing the traversal in full.

Whereas, traversal determines where execution can proceed, resolution determines what data is retrieved or computed at each step.

In the preferred embodiment, traversal and resolution are co-designed. In particular, traversal paths are filtered by attribute availability, resolver outcomes may influence continuation or termination of traversal, and traversal results may be partially or fully satisfied from a cache. By contrast, in a SQL database system, traversal (JOINs) and resolution (SELECT) are decoupled and static. Similarly, in a graph database system, traversal is structural; and computation based on retrieved results, is external or post-hoc.

Predictive materialisation means precomputing and storing query results before they are explicitly requested, based on a prediction that they will be needed soon (for example, from historical query/workload patterns or user interaction sequences). In the context of traversal, predictive materialisation means:
- an anticipation that a particular traversal (or class of traversals) will be needed soon, and
- computation and storage of the traversal result *before* it is explicitly requested, so later queries can read the stored result instead of re-following the relationships.

In essence, predictive materialisation of a traversal is a speculative / pre-emptive materialisation of traversal results which may be based on predicted workload or user/query sequences.

The data management method and the Data Management System enables traversal from a first entity type to any related entity types. More specifically, execution of a query may result in the materialisation of one or more traversal results corresponding to paths through related entity instances, attributes, and relationships. Take for example, an instance of a person entity, relationships in the Data Management System display all related entity types or entity instances to that instance. In a similar manner, the related entities of an organisation entity, may include people, orders, invoices etc..

For clarity and brevity, as a system for implementing the traversal process of the query, search and retrieval component of the data management method, will be referred to henceforth as the "Traversal System".

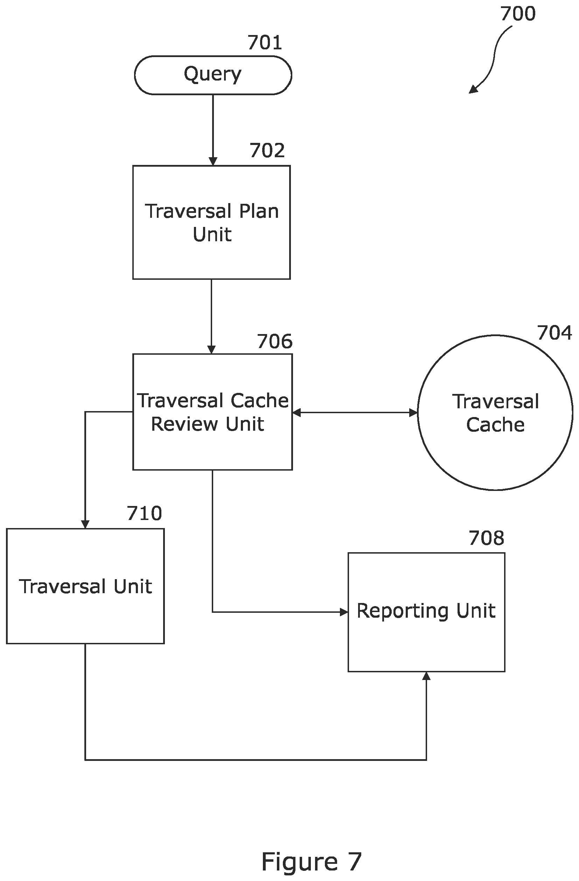

Referring to Figure 7, in one embodiment, the Traversal System (700) may comprise a traversal plan unit (702), which is configured, to receive a declarative entity traversal query (701) identifying requested attributes and relationship traversals.

The traversal plan unit (702) is further configured to compile an executable traversal plan from the received query (701). The traversal plan may, comprise a plurality of attribute-specific resolver tasks corresponding to transversal steps between related entity instances.

In the Data Management System shown in Figure 1, traversal between entity instances is performed using the entity type link field unit (50). Forward and reverse pointers within the entity type link field unit (50) enable traversal from a first entity instance to one or more related entity instances without performing join operations over attribute or relationship tables. During execution of a traversal query, resolver tasks access the entity type link field unit (50) to identify traversal paths corresponding to relationship types permitted by the mapping data and link field matrix. Accordingly, traversal is executed directly over link field structures rather than being derived dynamically from foreign key joins or node-local adjacency lists. In some embodiments, traversal is performed using only reverse pointers or only forward pointers, such that bidirectional pointer storage is not required for all entity types or traversal paths.

Returning to Figure 7, the Traversal System (700) may comprise a traversal cache (704), configured to store one or more traversal results from the execution of at least part of a traversal plan. For brevity, a traversal result stored in the traversal cache (704) will be referred to henceforth as a "cached traversal result". For example, a cached traversal result may comprise a set of entity instance identifiers, relationship instance identifiers or attribute values.

The skilled person will acknowledge that the above example of a traversal result is provided for illustrative purposes only. In particular, the skilled person will acknowledge that the traversal cache (704) in the present embodiment of the Traversal System (700) is in no way limited to the storage of the above-mentioned traversal results. On the contrary, the traversal cache (704) is operable to store any form of traversal results including computed values, or any combination of some or all of entity instance identifiers, relationship instance identifiers, attribute values and computed values, structured in a form suitable for direct return to a requesting software application.

The Traversal System (700) may generate and store one or more cache identifiers for a cached traversal result. The cache identifiers reflect execution-relevant parameters and may depend upon one or more of: an initiating entity instance, an initiating entity type, a traversal path, a traversal depth, a relationship type filter, an attribute projection defining requested attributes, authorisation context, localisation context, or a temporal context. The cache identifiers enable the retrieval from the traversal cache (704) of their corresponding cached traversal results, so they may be re-used for subsequent queries matching the parameters of the cache identifiers.

In an embodiment, the Traversal System (700) may perform predictive materialisation of traversal results. In particular, the Traversal System (700) may execute resolver tasks in advance of an explicit query, to populate the traversal cache (704) with one or more cached traversal results. This may be triggered by the detection of repeated traversal patterns across queries; the identification of frequently accessed traversal paths; or a determination that a traversal plan exhibits computational complexity above a threshold.

The skilled person will acknowledge that these triggers for predictive materialisation are provided for illustration purposes only. In particular, the skilled person will acknowledge that the predictive materialisation operations of the Traversal System of the present embodiment is in no way limited to these triggering conditions. On the contrary, the Traversal System of the present embodiment is operable to trigger the predictive materialisation operations by any suitable conditions such as anticipation of subsequent traversal requests arising from a user interface workflow
The Traversal System (700) may record one or more traversal dependency metadata for a cached traversal result. The traversal dependency metadata may identify one or more of: entity types, attribute types, relationship types, entity instances, relationship instances, attribute instances, external data sources, or resolver tasks that contributed to a given cached traversal result. The Traversal System (700) may store traversal dependency metadata in an index (not shown) to support rapid identification of cached traversal results affected by changes in underlying data.

The Traversal System (700) may further comprise a traversal cache review unit (706) which is communicably coupled with the traversal plan unit (702) and the traversal cache (704). The traversal cache review unit (706) is configured to receive a traversal plan from the traversal plan unit (702) and to interrogate the traversal cache (704) to determine whether a traversal result corresponding to at least a portion of the traversal plan has been previously materialised and stored in the traversal cache (704).

The traversal cache review unit (706) is further communicably coupled with a reporting unit (708) and a traversal unit (710). In the event, the traversal cache review unit (706) establishes the availability of a valid cached traversal result which meets the requirements of the traversal plan, the traversal cache review unit (706) is configured to retrieve it from the traversal cache (704) and transmit the cached traversal result to a reporting unit (708), without re-executing the corresponding traversal steps. Otherwise, the traversal cache review unit (706) is configured to transmit the traversal plan to the traversal unit (710), which is configured in turn to execute the traversal plan and return the traversal results to the reporting unit (708).

The Traversal System may subscribe to update notifications generated in response to changes in underlying entity, attribute, or relationship data. For example, update notifications may be generated on creation, mutation, deletion, or version change of one or more of: entity instances, relationship instances, attribute instances, or external data accessed by resolver tasks/instances. An update notification may include one or more identifiers or classifications sufficient to associate the corresponding change in the underlying entity, attribute, or relationship data with traversal dependency metadata. The Traversal System may receive update notifications through a message-based publish-subscribe mechanism or a data bus as will be described below. Alternatively or additionally, the Traversal System may receive update notifications through an event stream, or an equivalent signalling mechanism.

Upon receipt of an update notification, the Traversal System may identify which cached traversal results are affected by the change, by evaluating the recorded traversal dependency metadata. Rather than invalidating all cached results, the Traversal System may selectively invalidate or refresh only those traversal results affected by the update, by re-executing corresponding portions of a traversal plan. In one embodiment, the Traversal System refreshes cached traversal results by re-executing only those resolver tasks whose inputs or dependencies correspond to the change, while reusing unaffected intermediate results.

In one embodiment, the Traversal System may maintain multiple layers of caching. In an example, a first cache layer may store results of attribute-specific resolver tasks; a second cache layer may store results of traversal steps between related entity instances; and a third cache layer may store complete traversal results for composite traversal queries. The skilled person will acknowledge that the above-mentioned caching layers are provided for illustrative purposes only. In particular, the skilled person will acknowledge that the Traversal System of the present embodiment is in no way limited to these caching layers. On the contrary, the Traversal System of the present embodiment is operable with any form of layer caching. In response to update notifications, the Traversal System may invalidate or refresh only affected cache layers, thereby limiting re-computation to impacted portions of traversal execution.

In a further embodiment, the Traversal System may maintain cache coherence across distributed deployments. Each deployment may maintain a local traversal cache and subscribe to update notifications. An update notification may cause each deployment to locally invalidate or refresh only the cached traversal results affected by the change.

By selectively re-materialising affected traversal results in response to update notifications, the Traversal System maintains cache coherence while avoiding global cache invalidation and repeated re-computation of unaffected traversal paths. This event-driven approach improves execution efficiency, reduces compute overheads, network communication, and query latency when processing complex traversal queries over distributed data sources. The re-materialised data may exist in memory, high-performance localised storage, or a combination of both for larger data sets.

In another embodiment, cached traversal results may have associated validity conditions. Validity conditions may comprise, for example, a time-to-live, a version identifier or a consistency marker. The skilled person will acknowledge that these validity conditions are provided for illustrative purposes only. In particular, the skilled person will acknowledge that the Traversal System of the present embodiment is not limited to these validity conditions. On the contrary, the Traversal System of the present embodiment is operable with any suitable condition for cached traversal results, including a dependency set, or a combination of the time-to-live, version identifier, consistency marker and dependency set conditions. The Traversal System may treat a cached traversal result as valid when the validity conditions remain satisfied and no applicable update notification indicates an invalidating change.

In a further embodiment, cached traversal results may be scoped. Scoping may comprise one or more of: scoping to a subset of entity instances, scoping to a representational model, scoping to a relationship type, scoping to a user context or role, scoping to a locale. The skilled person will acknowledge that these scoping activities are provided for illustration purposes. In particular, the skilled person will acknowledge that the Traversal System of the present embodiment is in no way limited to these scoping operations. On the contrary, the Traversal System of the present embodiment is operable with any form of scoping activities, including by way of further example, scoping to a tenant, or scoping to a time range. Scoping reduces re-computation and reduces the extent of cache refresh required following update notifications.

### 2.3 Overarching Data Management Method

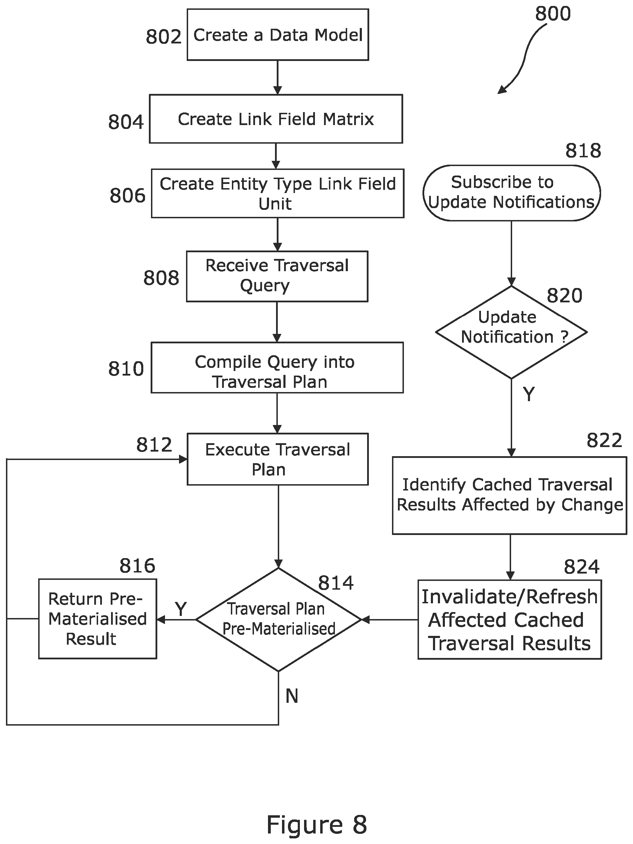

Having discussed, in the previous sections, the individual data modelling and query, search and retrieval components of data management method, Figure 8 together with Figure 1, provides an overarching view of the method showing the data modelling and query, search and retrieval components together.

Specifically, the data management method (800) comprises the steps, as shown in Figures 3, 4a and 4b, of:
creating (802) a data model comprising one or more details of an entity type (10), related through one or more relationship types (20), one or more details of an attribute type (30) and a link field matrix defining permitted associations between the entity types (10), attribute types (30), and relationship types (20);
creating (804) a link field matrix defining permitted associations between the entity types (10), attribute types (30), and relationship types (20) thereby eliminating the need for storage provision for an attribute type (30) that is not associated with an instance of an entity type (10); and
creating the entity type link field unit (50) comprising one or more of forward and reverse pointers, identifying related entity instances in accordance with the link field matrix, to support traversal execution without join operations;

The data management method (800) then comprises the steps of:
receiving (808) a declarative entity traversal query identifying one or more requested attribute types (30) and one or more relationship traversal constraints;
compiling (810) the query into an executable traversal plan comprising a plurality of attribute-specific resolver tasks and traversal steps established using the link field matrix and the or each pointer of the entity type link field unit (50); and
executing (812) the traversal plan by traversing between entity instances using the or each pointers of the entity type link field unit (50) and invoking resolver tasks to retrieve or compute attribute values associated with the traversed entity instances.

The data management method (800) may further comprise the steps of determining (814) whether a result of a portion of the traversal plan has been previously materialised and stored in a local cache; and in the event a valid cached traversal result is available, returning (816) it without re-executing the corresponding traversal steps of the traversal plan

The data management method (800) may further comprise the steps of:
subscribing (818) to update notifications generated in response to changes in underlying entity, attribute, or relationship data, as governed by the link field matrix;
receiving (820) an issued update notification;
identifying (822) in response to a received update notification, cached traversal results affected by a change, by referring to traversal dependencies recorded during compilation or execution of the traversal plan; and
selectively invalidating or refreshing (824) only the affected cached traversal results, by re-executing the corresponding resolver tasks.

### 3 Data Bus Architecture

The Data Management System separates data manipulation from storage using a data bus, which can be implemented with a message queue. This decouples a requesting system from a remote resolver, allowing for independent evolution of a client application and a remote resolver. Message queues decouple the client application and the remote resolver, ensuring the client application need not know the processing details on the remote resolver's end. This allows for asynchronous processing, supporting simultaneous task execution across multiple processors. The data bus architecture promotes horizontal scalability by enabling load-balancing of the resolver stack and enhancing system scalability, reliability, backend flexibility and fault tolerance. Services can invoke other resolvers while maintaining the order of operations, reinforcing data transaction coherence and integrity.

### 4 Exemplary Implementation

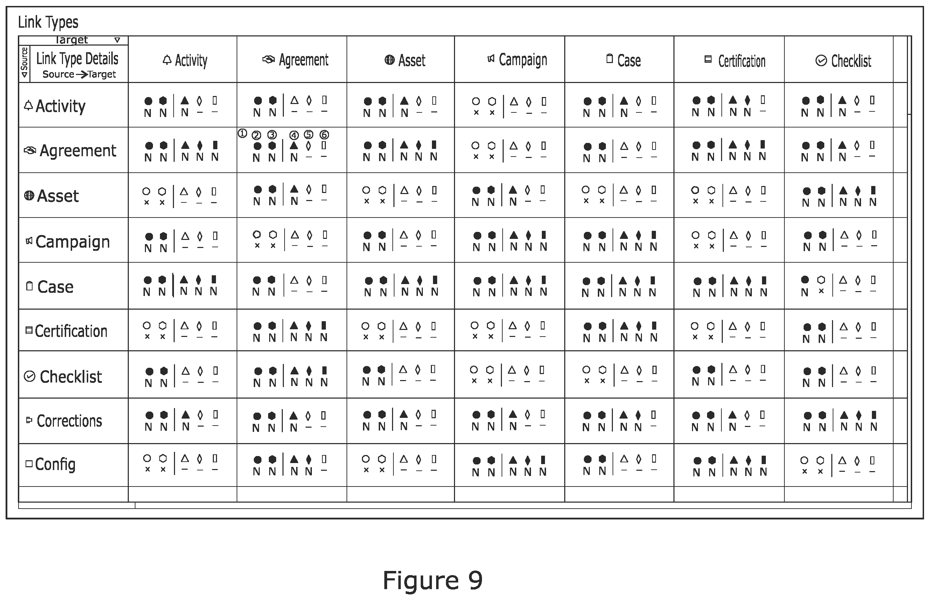

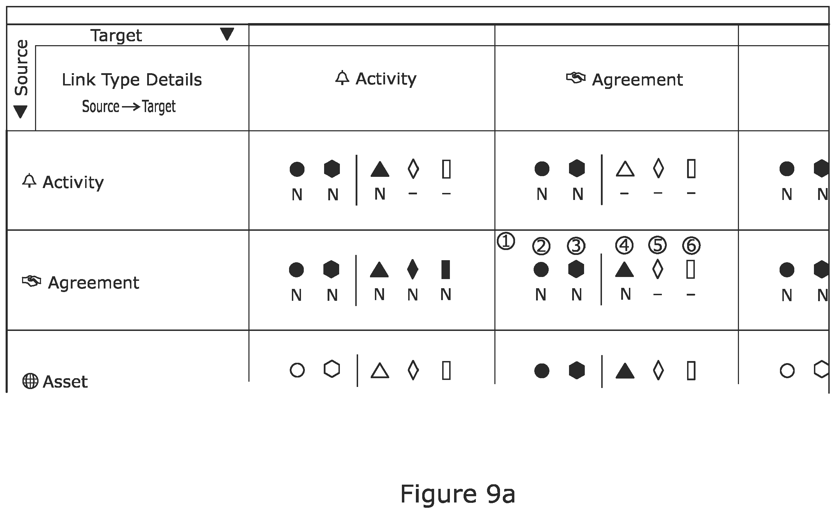

Figures 8, 8a, and 9 show several aspects of the link field matrix when visualised in an implementation of a link field matrix editor. Both horizontal and vertical columns and rows align such that an entity type in column 1 is the same entity type shown in row 1. The intersection of the row and column presents the various controls that the Data Management System will apply to constrain how entity types (and subtypes) can link to other entity types (or to the same type).

The skilled person will acknowledge that the examples shown in Figure 8, Figure 8a and Figure 9 are provided for illustration purposes only. Specifically, the skilled person will acknowledge that the link field matrix of the Data Management System is not limited to the implementation shown in Figure 8, Figure 8a and Figure 9. On the contrary, the link field matrix and the Data Management system are operable to represent any link between any one or more of entity types, attributes and relationships as required by a given use case therefor.

The invention is not limited to the specific details described herein which are provided by way of example only. Accordingly, various modifications and alterations may be made to the above without departing from the scope of the invention as set out in the following claims.

## Claims

1. A data management system comprising one or more processors and memory storing:
instructions that when executed by the or each processor cause the data management system to maintain a data model; and
a plurality of data structures representing the data model, comprising a plurality of entity types (10), a plurality of relationship types (20) and a plurality of attribute types (30);
**characterised in that**
(a) the data structures further comprises a link field matrix comprising structures that define permitted associations between the entity types (10), attribute types (30), and relationship types (20), wherein the link field matrix eliminates storage provision for an attribute type (30) that is not associated with an entity instance; and
(b) the data management system further comprises:
a first table (50) comprising one or more of forward and reverse pointers identifying related entity instances in accordance with the link field matrix, to support traversal execution using one or more of the link field matrix structures separate from the entity instances;
a traversal plan unit (702) configured to receive a declarative entity traversal query and compile it into an executable traversal plan comprising a plurality of attribute-specific resolver tasks and traversal steps established using the link field matrix and the or each pointer of the first table (50); and
a traversal unit (710) configured to execute the traversal plan by traversing between entity instances using the or each pointers of the first table (50) and invoking resolver tasks to retrieve or compute one or more values of the or each attribute instances associated with the traversed entity instances, the or each values being either or both of stored in memory and retrieved from one or more local or remote data sources.

2. The data management system of Claim 1 further comprising a traversal cache review unit (706) configured to determine whether a result of a portion of the traversal plan has been previously materialised and stored in a local cache (704); and in the event a valid cached traversal result is available, to return it without re-executing the corresponding traversal steps of the traversal plan.

3. The data management system of Claim 1 or Claim 2, wherein the data management system is configured to:
subscribe to update notifications generated in response to changes in underlying entity, attribute, or relationship data, as governed by the link field matrix;
identify, in response to a received update notification, cached traversal results affected by a change, by referring to traversal dependencies recorded during compilation or execution of the traversal plan; and
selectively invalidate or refresh only the affected cached traversal results, by re-executing the corresponding resolver tasks.

4. The data management system of any of the preceding claims, wherein the link field matrix is configured to govern relationships between entity types by enforcing one or more of constraints, executable logic, and dynamic actions triggered during traversal execution.

5. The data management system of any of the preceding claims, wherein resolver tasks retrieve or compute values of the attribute instances associated with relationship instances.

6. The data management system of any of the preceding claims, wherein a relationship type (20) is represented as an attribute type (30) denoting an enhanced relationship between entity instances.

7. The data management system of any of any of the preceding claims, wherein each attribute type (30) is associated with a resolver task executable as part of the traversal plan to retrieve or compute values of attribute instances.

8. The data management system of any of the preceding claims, wherein resolver tasks execute concurrently.

9. The data management system of any of the preceding claims wherein the link field matrix supports multiple concurrent representational models without duplicating underlying data.

10. The data management system of any of the preceding claims, wherein the link field matrix enforces non-destructive linking of entity instances.

11. The data management system of any of the preceding claims, wherein the link field matrix enables assembly of unrelated entity types into a traversal-addressable collection.

12. The data management system of any of the preceding claims, wherein resolver tasks integrate data from heterogeneous storage technologies.

13. The data management system of any of the preceding claims wherein execution of resolver tasks includes pre-execution or post-execution hooks.

14. The data management system of any of the preceding claims, wherein resolver tasks execute within a microservices architecture, or within the data management system directly, wherein query planning and predictive cache management enable immediate in-system or distributed resolver task execution.

15. The data management system of Claim 3, wherein update notifications are propagated via a publish-subscribe messaging system.

16. A data management method comprising the steps of:
creating (802) a plurality of data structures representing a data model, wherein the data structures comprise a plurality of entity types (10), a plurality of relationship types (20) and a plurality of attribute types (30);
creating (804) a link field matrix comprising structures that define permitted associations between the entity types (10), attribute types (30), and relationship types (20), wherein the link field matrix eliminates storage provision for an attribute type (30) that is not associated with an entity instance;
creating (806) a first table (50) comprising one or more of forward and reverse pointers identifying related entity instances in accordance with the link field matrix, to support traversal execution using one or more of the link field matrix structures separate from the entity instances;
receiving (808) a declarative entity traversal query and compiling (810) it into an executable traversal plan comprising a plurality of attribute-specific resolver tasks and traversal steps established using the link field matrix and the or each pointer of the first table (50); and
executing (812) the traversal plan by traversing between entity instances using the or each pointers of the first table (50) and invoking resolver tasks to retrieve or compute values of the or each attribute instance associated with the traversed entity instances.

17. The data management method of Claim 16, where the method comprises the further steps of determining (814) whether a result of a portion of the traversal plan has been previously materialised and stored in a local cache; and in the event a valid cached traversal result is available, returning (816) it without re-executing the corresponding traversal steps of the traversal plan.

18. The data management method of Claim 16 or Claim 17, where the method comprises the further steps of:
subscribing (818) to update notifications generated in response to changes in underlying entity, attribute, or relationship data, as governed by the link field matrix;
receiving (820) an issued update notification;
identifying (822) in response to a received update notification, cached traversal results affected by a change, by referring to traversal dependencies recorded during compilation or execution of the traversal plan; and
selectively invalidating or refreshing (824) only the affected cached traversal results, by re-executing the corresponding resolver tasks.

19. The data management method of any one of Claims 16 to 18, where the step of executing (812) the traversal plan by traversing between entity instances using the or each pointers of the first table (50) and invoking resolver tasks to retrieve or compute values of the or each attribute instance associated with the traversed entity instances, comprises the step of retrieving data from one or more of a local store of data and a remote source of data.

20. The data management method of any one of Claims 16 to 19, where the step of executing (812) the traversal plan by traversing between entity instances using the or each pointers of the first table (50) and invoking resolver tasks to retrieve or compute values of the or each attribute instance associated with the traversed entity instances comprises the step of executing resolver tasks concurrently.

21. The data management method of any one of Claims 16 to 20, where the step of executing (812) the traversal plan by traversing between entity instances using the or each pointers of the first table (50) and invoking resolver tasks to retrieve or compute values of the or each attribute instance associated with the traversed entity instances comprises the step of executing resolver tasks to integrate data from heterogeneous storage technologies.

22. The data management method of any one of Claims 16 to 21, where the step of executing (812) the traversal plan by traversing between entity instances using the or each pointers of the first table (50) and invoking resolver tasks to retrieve or compute values of the or each attribute instance associated with the traversed entity instances comprises the step of executing resolver tasks using pre-execution and post-execution hooks.
